# EUROPEAN PATENT SPECIFICATION

(11) **EP 4 518 377 B1**
(45) Date of publication and mention of the grant of the patent: **29.07.2026**
(21) Application number: 23826297.6
(22) Date of filing: 16.06.2023
(51) Int. Cl.: H04W 4/80

(54) **BLUETOOTH DATA PROCESSING METHOD, TERMINAL DEVICE, AND READABLE STORAGE MEDIUM**
BLUETOOTH-DATENVERARBEITUNGSVERFAHREN, ENDGERÄTEVORRICHTUNG UND LESBARES SPEICHERMEDIUM
PROCÉDÉ DE TRAITEMENT DE DONNÉES BLUETOOTH, DISPOSITIF TERMINAL ET SUPPORT DE STOCKAGE LISIBLE

(30) Priority: 23.06.2022 CN 202210718449
(43) Date of publication of application: 05.03.2025
(73) Proprietor: Huawei Technologies Co., Ltd., Shenzhen, Guangdong 518129 (CN)
(72) Inventor: HAO, Liang, Shenzhen, Guangdong 518129 (CN); WANG, Shufeng, Shenzhen, Guangdong 518129 (CN); DONG, Fuqi, Shenzhen, Guangdong 518129 (CN); WANG, Jincheng, Shenzhen, Guangdong 518129 (CN); ZHANG, Jingjing, Shenzhen, Guangdong 518129 (CN)
(74) Representative: Epping - Hermann - Fischer
(86) International application number: PCT/CN2023/100748
(87) International publication number: WO 2023/246648

(56) References cited:
- WO-A1-2019/199049
- CN-A- 110 611 524
- CN-A- 110 891 259
- CN-A- 111 713 141
- CN-A- 112 996 089
- CN-A- 114 554 463
- CN-A- 114 554 463

## Description

### TECHNICAL FIELD

Embodiments of this application relate to the field of Bluetooth technologies, and in particular, to a Bluetooth data processing method, a terminal device, and a readable storage medium.

### BACKGROUND

With development of terminal technologies, intelligent terminal devices tend to be increasingly diversified, and a data processing capability becomes increasingly strong. For example, forms of the intelligent terminal devices have gradually evolved from a mobile phone and a tablet to a watch, a speaker, and a smart screen. For example, smartphones include a 2-core mobile phone, a 4-core mobile phone, an 8-core mobile phone, and the like. In addition, with development of communication technologies, a communication capability of the intelligent terminal device is increasingly strong. Bluetooth (Bluetooth, BT) communication has become a basic communication manner supported by the intelligent terminal device.

Currently, in implementation of Bluetooth communication, an open interface (framework interface) implemented by a Bluetooth protocol stack and a Bluetooth service is usually deployed on an application processor (application processor, AP) of the intelligent terminal device, and the AP processes related Bluetooth data. In this way, when data needs to be frequently transmitted between two terminal devices that perform Bluetooth communication, the AP is always in a working state, and a working current of the AP is usually large. Consequently, power consumption of the terminal device is high.

Document CN 114 554 463 A describes a Bluetooth communication method, a Bluetooth broadcast method, a Bluetooth device, and a computer-readable storage medium. The Bluetooth communication method provided by the present application is applied to a Bluetooth device, and the Bluetooth device includes a first Bluetooth module and a second Bluetooth module respectively running on multiple processors of the Bluetooth device; the method includes: receiving a Bluetooth data packet from an object Bluetooth device ;Analyze the communication control identification carried in the Bluetooth data packet, and the communication control identification is used to determine the communication link corresponding to the Bluetooth data packet; According to the link identification of the communication link corresponding to the Bluetooth data packet, and the link stored in the Bluetooth device The mapping relationship between the road identifier and the bluetooth module, one of the first bluetooth module and the second bluetooth module is determined as the bluetooth module corresponding to the bluetooth data packet; the bluetooth data packet is distributed to the corresponding bluetooth module.

### SUMMARY

Embodiments of this application provide a Bluetooth data processing method, a terminal device, and a readable storage medium, to reduce power consumption of the terminal device. The present invention is defined by the attached set of claims.

According to a first aspect, a Bluetooth data processing method is provided, applied to a terminal device. The terminal device includes a main processing unit, an auxiliary processing unit, and a Bluetooth chip. The Bluetooth data processing method includes: The Bluetooth chip receives first Bluetooth data, and sends the first Bluetooth data to the auxiliary processing unit if the Bluetooth chip determines that the first Bluetooth data meets a preset condition; and the auxiliary processing unit processes the first Bluetooth data.

According to the Bluetooth data processing method provided in the first aspect, some Bluetooth services are deployed on the auxiliary processing unit of the terminal device for processing. The Bluetooth chip has a Bluetooth data filtering capability, and sends Bluetooth data that meets the preset condition to the auxiliary processing unit for processing, to offload the Bluetooth data that originally needs to be processed by the main processing unit of the terminal device, so that working time of the main processing unit is shortened, power consumption of the terminal device is reduced, and a battery life of the terminal device is prolonged.

In a possible implementation, that the Bluetooth chip determines that the first Bluetooth data meets a preset condition includes: The Bluetooth chip parses the first Bluetooth data to obtain a first device identifier and a first logical channel index; and if the first device identifier and the first logical channel index are in an information list, the Bluetooth chip determines that the first Bluetooth data meets the preset condition, where the information list is used to store a device identifier of a target device and logical channel information of a target service, and the auxiliary processing unit is configured to process Bluetooth data of the target service.

In this implementation, the Bluetooth chip stores the information list, and the information list stores related information of a Bluetooth service deployed on the auxiliary processing unit for processing and the device identifier of the target device. The Bluetooth chip has a capability of parsing and filtering Bluetooth data. The Bluetooth chip parses the first Bluetooth data to obtain the first device identifier and the first logical channel index. If the first device identifier and the first logical channel index are in the information list, it indicates that the first Bluetooth data needs to be processed on the auxiliary processing unit. Some Bluetooth services are deployed on the auxiliary processing unit of the terminal device for processing, so that working time of the main processing unit is shortened, and power consumption of the terminal device is reduced.

In a possible implementation, the Bluetooth data processing method further includes: The Bluetooth chip sends the first Bluetooth data to the main processing unit if the first device identifier or the first logical channel index is not in the information list; and the main processing unit processes the first Bluetooth data.

In this implementation, if the first device identifier or the first logical channel index is not in the information list, it indicates that the first Bluetooth data does not need to be processed by the auxiliary processing unit, but is still processed by the main processing unit.

In a possible implementation, the Bluetooth data processing method further includes: The auxiliary processing unit generates second Bluetooth data of a target service; the auxiliary processing unit sends the second Bluetooth data to the Bluetooth chip; the Bluetooth chip encapsulates the second Bluetooth data to obtain to-be-sent data; and the Bluetooth chip sends the to-be-sent data to the target device.

In this implementation, the terminal device serves as a data transmit end to send the data of the target service to the target device. The data of the target service is processed by the auxiliary processing unit, so that energy consumption of the terminal device is reduced, and a battery life is prolonged.

In the claimed embodiment, before the Bluetooth chip receives the first Bluetooth data, the method further includes: The main processing unit sends a first MAC address of the target device and first service information of the target service to the auxiliary processing unit, where the target device is a device that communicates with the terminal device through Bluetooth, and the first service information is used by the auxiliary processing unit to process Bluetooth data of the target service; the auxiliary processing unit sends the first MAC address and second service information to the Bluetooth chip, where the second service information is some or all of the first service information; and the Bluetooth chip adds the device identifier of the target device and the logical channel information of the target service to the information list based on the first MAC address and the second service information, where the device identifier of the target device and the logical channel information of the target service are used by the Bluetooth chip to process the Bluetooth data of the target service.

In this implementation, some Bluetooth services are offloaded from the main processing unit to the auxiliary processing unit for processing. The main processing unit and the auxiliary processing unit synchronize the MAC address of the target device and the first service information of the target service, and the auxiliary processing unit and the Bluetooth chip transmit the MAC address of the target device and the second service information of the target service, so that the auxiliary processing unit and the Bluetooth chip learn that the target service is processed on the auxiliary processing unit. Subsequently, the auxiliary processing unit and the Bluetooth chip may process the Bluetooth data of the target service, and offload the Bluetooth data that originally needs to be processed by the main processing unit of the terminal device, so that working time of the main processing unit is shortened, power consumption of the terminal device is reduced, and a battery life of the terminal device is prolonged.

In a possible implementation, the device identifier of the target device includes an ACL identifier. In a possible implementation, the terminal device and the target device support a GATT, and the target service includes at least one character; the first service information, the second service information, and the logical channel information of the target service include a logical channel index and a character property of a target character in the at least one character; and the first service information further includes a UUID of the target service, and the first service information is used by the auxiliary processing unit to process Bluetooth data of the target character.

In a possible implementation, the target character needs to be enabled; and the first service information, the second service information, and the logical channel information of the target service further include a logical channel index of a descriptor of the target character.

In this implementation, the logical channel index of the descriptor of the target character is used to enable the target character, and the main processing unit and/or the auxiliary processing unit may enable the target character.

In a possible implementation, the target character is not enabled by the main processing unit.

In this implementation, the main processing unit does not enable the target character, and the auxiliary processing unit needs to enable the target character. Therefore, the first service information, the second service information, and the logical channel information of the target service need to include the logical channel index of the descriptor of the target character, so that the auxiliary processing unit enables the target character.

In a possible implementation, before the Bluetooth chip receives first Bluetooth data, the method further includes: The main processing unit and/or the auxiliary processing unit enable/enables the target character.

In a possible implementation, the terminal device and the target device support an RFCOMM protocol; and the first service information and the second service information include a logical channel number of the target service and a role of the target service, where the role is a client or a server.

In a possible implementation, the first service information further includes a UUID of the target service.

In a possible implementation, before the Bluetooth chip adds the device identifier of the target device and the logical channel information of the target service to the information list based on the first MAC address and the second service information, the method further includes: The main processing unit sends channel information to the Bluetooth chip, where the channel information includes a second MAC address of the target device and a DLCI of the target service. That the Bluetooth chip adds the device identifier of the target device and the logical channel information of the target service to the information list based on the first MAC address and the second service information includes: The Bluetooth chip adds the device identifier of the target device and the logical channel information of the target service to the information list based on the first MAC address, the second service information, the second MAC address, and the DLCI.

In a possible implementation, that the Bluetooth chip adds the device identifier of the target device and the logical channel information of the target service to the information list based on the first MAC address, the second service information, the second MAC address, and the DLCI includes: The Bluetooth chip determines the device identifier of the target device based on the first MAC address or the second MAC address if the first MAC address is the same as the second MAC address; the Bluetooth chip obtains a to-be-compared logical channel number and a to-be-compared role based on the DLCI; and if the to-be-compared logical channel number is the same as the logical channel number of the target service, and the to-be-compared role is the same as the role of the target service, the Bluetooth chip determines the DLCI as the logical channel information of the target service, and adds the device identifier of the target device and the DLCI to the information list.

In a possible implementation, the Bluetooth data processing method further includes: The main processing unit sends first information to the auxiliary processing unit, where the first information indicates the main processing unit to process the Bluetooth data of the target service; the auxiliary processing unit deletes the first service information based on the first information; the auxiliary processing unit sends second information to the Bluetooth chip, where the second information indicates the main processing unit to process the Bluetooth data of the target service; and the Bluetooth chip deletes the logical channel information of the target service from the information list based on the second information.

In this implementation, the target service may be redeployed on the main processing unit. Therefore, the related information of the target service needs to be deleted between the main processing unit, the auxiliary processing unit, and the Bluetooth chip, so that the main processing unit can process the Bluetooth data of the target service.

In a possible implementation, the information list includes a device list and an offload service list, the device list includes the device identifier of the target device, and the offload service list includes the device identifier of the target device and the logical channel information of the target service. In a possible implementation, the terminal device is a client of the target service, and the target device is a server of the target service.

According to a second aspect, a Bluetooth data processing apparatus is provided, and may be used in a terminal device. The Bluetooth data processing apparatus includes: a receiving module, configured to receive first Bluetooth data; a first processing module, configured to send the first Bluetooth data to a second processing module when determining that the first Bluetooth data meets a preset condition; and the second processing module, configured to process the first Bluetooth data.

In a possible implementation, the first processing module is configured to: parse the first Bluetooth data to obtain a first device identifier and a first logical channel index; and if the first device identifier and the first logical channel index are in an information list, determine that the first Bluetooth data meets the preset condition, where the information list is used to store a device identifier of a target device and logical channel information of a target service; and the second processing module is configured to process Bluetooth data of the target service.

In a possible implementation, the first processing module is further configured to: send the first Bluetooth data to a third processing module if the first device identifier or the first logical channel index is not in the information list; and the third processing module is configured to process the first Bluetooth data.

In a possible implementation, the second processing module is further configured to: generate second Bluetooth data of a target service, and send the second Bluetooth data to the first processing module. The first processing module is further configured to encapsulate the second Bluetooth data to obtain to-be-sent data. The Bluetooth data processing apparatus further includes a sending module, configured to send the to-be-sent data to a target device.

In a possible implementation, the third processing module is further configured to: before the receiving module receives the first Bluetooth data, send a first MAC address of the target device and first service information of the target service to the second processing module, where the target device is a device that communicates with the terminal device through Bluetooth, and the first service information is used by the second processing module to process Bluetooth data of the target service. The second processing module is further configured to send the first MAC address and second service information to the first processing module, where the second service information is some or all of the first service information. The first processing module is further configured to add the device identifier of the target device and the logical channel information of the target service to the information list based on the first MAC address and the second service information, where the device identifier of the target device and the logical channel information of the target service are used by the first processing module to process the Bluetooth data of the target service. In a possible implementation, the device identifier of the target device includes an ACL identifier. In a possible implementation, the terminal device and the target device support a GATT, and the target service includes at least one character; the first service information, the second service information, and the logical channel information of the target service include a logical channel index and a character property of a target character in the at least one character; and the first service information further includes a UUID of the target service, and the first service information is used by the second processing module to process Bluetooth data of the target character.

In a possible implementation, the target character needs to be enabled; and the first service information, the second service information, and the logical channel information of the target service further include a logical channel index of a descriptor of the target character.

In a possible implementation, the target character is not enabled by the third processing module. In a possible implementation, the third processing module and/or the second processing module are/is further configured to: before the receiving module receives the first Bluetooth data, enable the target character.

In a possible implementation, the terminal device and the target device support an RFCOMM protocol; and the first service information and the second service information include a logical channel number of the target service and a role of the target service, where the role is a client or a server.

In a possible implementation, the first service information further includes a UUID of the target service.

In a possible implementation, the third processing module is further configured to send channel information to the first processing module, where the channel information includes a second MAC address of the target device and a DLCI of the target service. The first processing module is configured to add the device identifier of the target device and the logical channel information of the target service to the information list based on the first MAC address, the second service information, the second MAC address, and the DLCI.

In a possible implementation, the first processing module is configured to: determine the device identifier of the target device based on the first MAC address or the second MAC address if the first MAC address is the same as the second MAC address; obtain a to-be-compared logical channel number and a to-be-compared role based on the DLCI; if the to-be-compared logical channel number is the same as the logical channel number of the target service, and the to-be-compared role is the same as the role of the target service, determine the DLCI as the logical channel information of the target service; and add the device identifier of the target device and the DLCI to the information list.

In a possible implementation, the third processing module is further configured to send first information to the second processing module, where the first information indicates the third processing module to process the Bluetooth data of the target service. The second processing module is further configured to: delete the first service information based on the first information, and send second information to the first processing module, where the second information indicates the third processing module to process the Bluetooth data of the target service. The first processing module is further configured to delete the logical channel information of the target service from the information list based on the second information.

In a possible implementation, the information list includes a device list and an offload service list, the device list includes the device identifier of the target device, and the offload service list includes the device identifier of the target device and the logical channel information of the target service. In a possible implementation, the terminal device is a client of the target service, and the target device is a server of the target service.

According to a third aspect, a terminal device is provided, including a processor and a Bluetooth chip. The processor includes a main processing unit and an auxiliary processing unit. The processor is coupled to a memory. The processor executes a computer program stored in the memory, to implement the method provided in the first aspect.

According to a fourth aspect, a program is provided. When the program is executed by a processor, the program is used to perform the method provided in the first aspect.

According to a fifth aspect, a computer-readable storage medium is provided. The computer-readable storage medium stores instructions. When the instructions are run on a computer or a processor, the method provided in the first aspect is implemented.

According to a sixth aspect, a program product is provided. The program product includes a computer program, the computer program is stored in a readable storage medium, at least one processor of a device may read the computer program from the readable storage medium, and the at least one processor executes the computer program, so that the device implements the method provided in the first aspect.

### BRIEF DESCRIPTION OF DRAWINGS

FIG. 1A to FIG. 1C are a group of diagrams of application scenarios to which an embodiment of this application is applicable;
FIG. 2 is a diagram of a structure of a terminal device according to an embodiment of this application;
FIG. 3 is a diagram of a structure of a Bluetooth protocol stack according to an embodiment of this application;
FIG. 4 is a diagram of a GATT data structure according to an embodiment of this application;
FIG. 5 is a diagram of logical channel management information of a rate meter service according to an embodiment of this application;
FIG. 6 is a diagram of a principle of processing Bluetooth data by a terminal device according to an embodiment of this application;
FIG. 7A and FIG. 7B are a diagram of a principle of processing Bluetooth data by a terminal device in BLE communication according to an embodiment of this application;
FIG. 8A and FIG. 8B are a diagram of a principle of processing Bluetooth data by a terminal device in classic Bluetooth according to an embodiment of this application;
FIG. 9 is a diagram of another principle of processing Bluetooth data by a terminal device according to an embodiment of this application;
FIG. 10A and FIG. 10B are a flowchart of a Bluetooth data processing method according to an embodiment of this application;
FIG. 11 shows a data structure in BLE communication according to an embodiment of this application;
FIG. 12 shows a data structure in classic Bluetooth communication according to an embodiment of this application;
FIG. 13 is another flowchart of a Bluetooth data processing method according to an embodiment of this application;
FIG. 14A and FIG. 14B are a diagram of another principle of processing Bluetooth data by a terminal device in BLE communication according to an embodiment of this application;
FIG. 15 is still another flowchart of a Bluetooth data processing method according to an embodiment of this application;
FIG. 16A and FIG. 16B are a diagram of another principle of processing Bluetooth data by a terminal device in classic Bluetooth according to an embodiment of this application;
FIG. 17 is still another flowchart of a Bluetooth data processing method according to an embodiment of this application; and
FIG. 18 is a diagram of a structure of a Bluetooth data processing apparatus according to an embodiment of this application.

### DESCRIPTION OF EMBODIMENTS

The following describes embodiments of this application with reference to the accompanying drawings.

The Bluetooth data processing method provided in this embodiment of this application is applicable to a scenario in which a multi-core terminal device processes Bluetooth data.

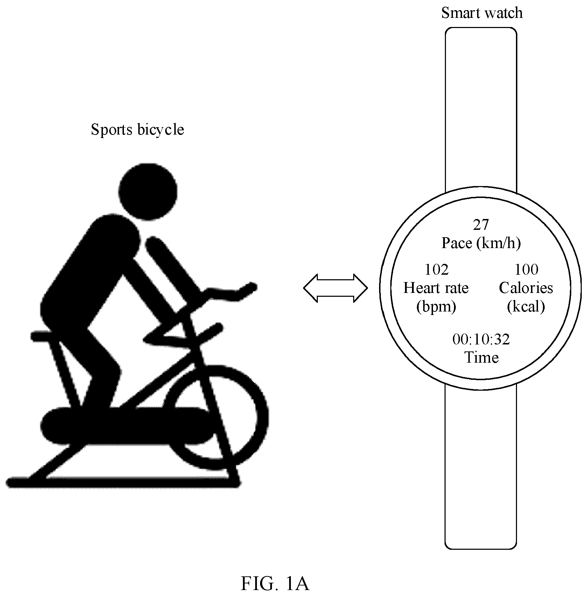

For example, FIG. 1A to FIG. 1C show three application scenarios, but FIG. 1A to FIG. 1C do not limit application scenarios of embodiments of this application.

In a scenario, as shown in FIG. 1A, a user uses a sports bicycle for fitness and wears a smart watch. Both the sports bicycle and the smart watch support a Bluetooth function. An application (application, APP) having a motion management function is installed on the smart watch. A name of an app is not limited in embodiments of this application, for example, a Health app. After the sports bicycle performs Bluetooth communication with the smart watch, in a process in which the user is exercising, the sports bicycle continuously reports related data to the smart watch through Bluetooth communication. Correspondingly, the smart watch receives the related data through Bluetooth communication, and displays exercise information in an interface of the Health app after processing, so that the user can view exercise details in the exercise process and adjust an exercise status in time. For example, as shown in FIG. 1A, the smart watch displays that the user has currently exercised for 10 minutes and 32 seconds, a heart rate is 102 times/minute (bpm), calories consumed is 100 kilocalories (kcal), and a pace of the sports bicycle is 27 kilometer/hour (km/h). In this example, the sports bicycle and the smart watch perform Bluetooth low energy (Bluetooth low energy, BLE) communication.

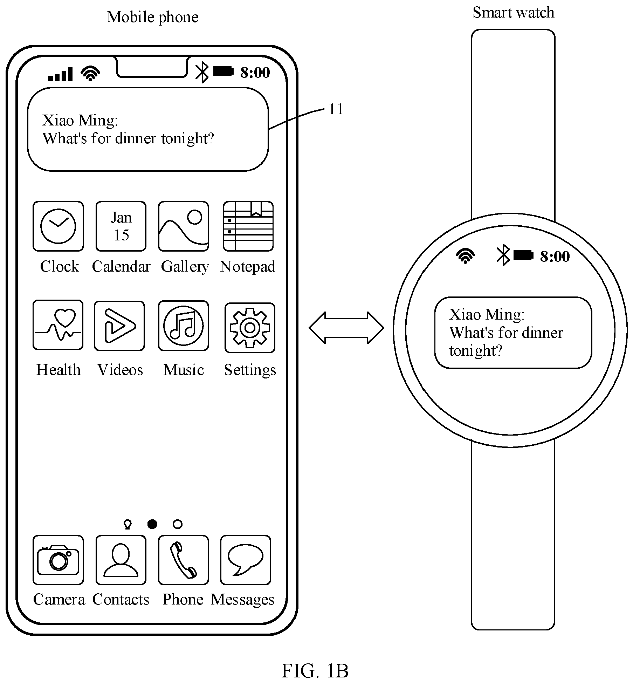

In another scenario, as shown in FIG. 1B, both the mobile phone and the smart watch support a Bluetooth function. An app having a message notification function is installed on the mobile phone and the smart watch. For example, the app is a system application built in the device, referred to as a message notification app. The mobile phone and the smart watch perform Bluetooth communication. The mobile phone receives a piece of prompt information. As shown in FIG. 1B, a prompt box 11 is displayed in a current interface of the mobile phone. The prompt box 11 includes the prompt information, and content is "Xiao Ming: What's for dinner tonight?" The mobile phone sends the prompt information to the smart watch through Bluetooth communication. Correspondingly, the smart watch receives the prompt information, and displays the prompt information after processing. Refer to display content of the smart watch in FIG. 1B. After seeing the prompt information, the user knows that Xiao Ming is asking what to eat tonight. The user can conveniently view the real-time prompt information on the mobile phone through the smart watch worn by the user, so that the user does not need to carry the mobile phone at any time, and the hands of the user are freed. In this example, the mobile phone and the smart watch perform classic Bluetooth communication.

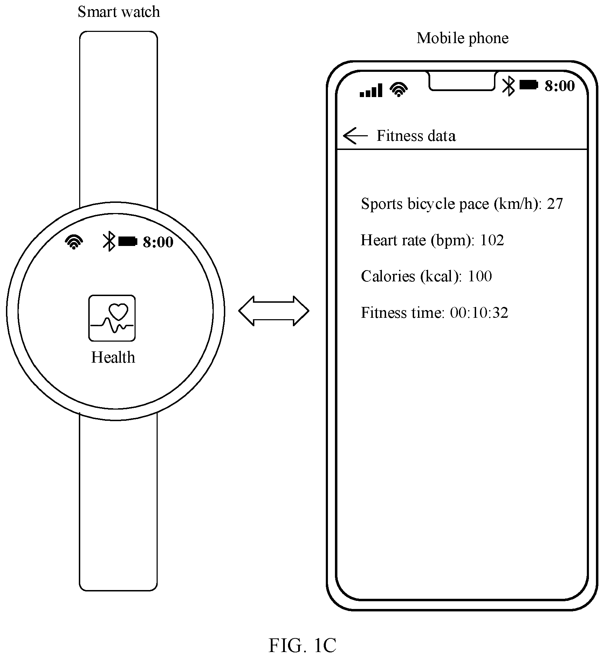

In still another scenario, as shown in FIG. 1C, both the mobile phone and the smart watch support a Bluetooth function. An application having a motion management function, for example, a Health app, is installed on the mobile phone and the smart watch. The mobile phone and the smart watch perform Bluetooth communication. After collecting Health data, the smart watch sends the data to the mobile phone through Bluetooth communication. Correspondingly, the mobile phone receives the Health data through Bluetooth communication, and displays the data in a related interface of the Health app after processing. For details, refer to current display content of the mobile phone in FIG. 1C. The display of the mobile phone compensates for a disadvantage of poor user experience caused by a narrow screen of the smart watch, and improves user experience. In this example, the mobile phone and the smart watch perform classic Bluetooth communication.

The multi-core terminal device in this embodiment of this application means that a processor of the terminal device includes at least two processing units. A quantity, names, and types of processing units are not limited in embodiments of this application. For example, the processor may include but is not limited to the following processing units: an application processor (AP), a microcontroller unit (microcontroller unit, MCU), a graphics processing unit (graphics processing unit, GPU), an image signal processor (image signal processor, ISP), a digital signal processor (digital signal processor, DSP), or a neural-network processor (neural-network processing unit, NPU). Different processing units may be independent components, or may be integrated into one or more processors.

At least one processing unit may be referred to as a main processing unit, and at least one processing unit other than the main processing unit may be referred to as an auxiliary processing unit. Quantities, names, and types of the main processing unit and the auxiliary processing unit are not limited in embodiments of this application. For example, the main processing unit may also be referred to as a primary processor or a primary core, and the auxiliary processing unit may also be referred to as an auxiliary processor, a secondary processing unit, a secondary processor, or a secondary core.

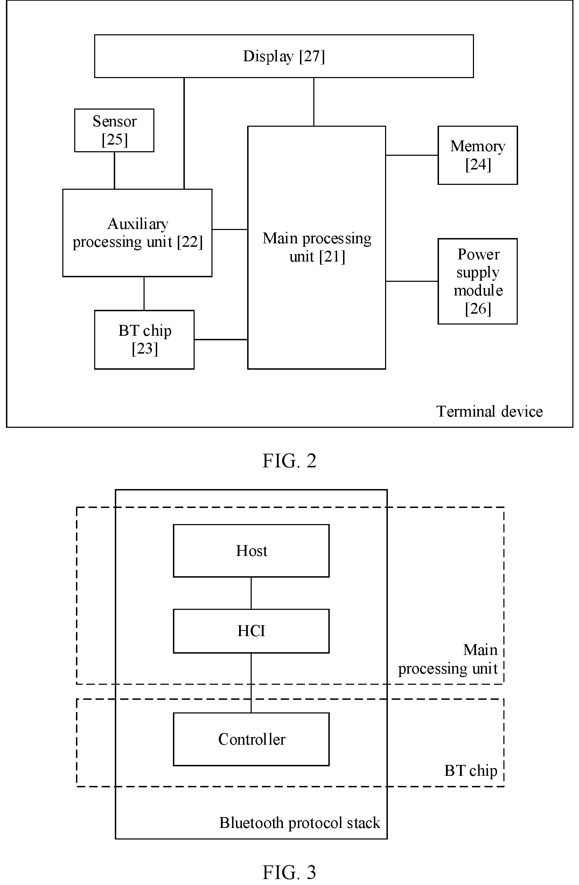

For example, FIG. 2 is a diagram of a structure of a terminal device according to an embodiment of this application. As shown in FIG. 2, the terminal device includes a main processing unit 21, an auxiliary processing unit 22, a Bluetooth (BT) chip 23, a memory 24, a sensor 25, a power supply module 26, and a display 27.

The main processing unit 21 is configured to: run an operating system of the terminal device, and deploy a Bluetooth protocol stack, a Bluetooth service, a Bluetooth open interface, and the like.

The auxiliary processing unit 22 is configured to: communicate with the sensor 25, and collect and process data of the sensor 25. Compared with the main processing unit 21, the auxiliary processing unit 22 may further run a lightweight operating system. In this embodiment of this application, the auxiliary processing unit 22 is further configured to process Bluetooth data of an offload (offload) service. An offload (offload) service is a Bluetooth service deployed on the auxiliary processing unit for processing.

The BT chip 23 is configured to perform Bluetooth connection and data transmission with another device. In this embodiment of this application, after receiving Bluetooth data, the BT chip 23 may distinguish and filter the Bluetooth data for the offload service, and send the Bluetooth data of the offload service to the auxiliary processing unit 22. The BT chip 23 is further configured to perform protocol encapsulation on the Bluetooth data of the offload service that is sent by the auxiliary processing unit 22, and send the Bluetooth data to a target device.

The memory 24 is configured to store executable program code and/or data, where the executable program code may include instructions. The memory 24 may include a program storage area and a data storage area. The memory 24 may include a high-speed random access memory, may further include a nonvolatile memory, for example, at least one magnetic disk storage device, a hard disk drive (hard disk drive, HDD), a solid-state drive (solid-state drive, SS), a flash memory device, or a universal flash storage (universal flash storage, UFS), and may further include a volatile memory (volatile memory), for example, a random access memory (random access memory, RAM).

The sensor 25 may include but is not limited to at least one of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient optical sensor, or a bone conduction sensor.

The power supply module 26 is configured to connect to a power supply (for example, a battery) to supply power to a module or a component in the terminal device, and may further monitor parameters such as a battery capacity, a quantity of battery cycles, and a battery health status (electric leakage and impedance).

It should be noted that a structure of the terminal device is not limited in FIG. 2. The terminal device may include more or fewer components than those shown in the figure, or a combination of a part of the components, or splits from a part of the components, or an arrangement of different components. The components shown in the figure may be implemented by hardware, software, or a combination of software and hardware. For example, the terminal device may further include at least one of the following: a mobile communication module, an audio module, a camera, a microphone, a headset jack, and an antenna.

It should be noted that a name and a type of the terminal device are not limited in embodiments of this application. For example, the terminal device may also be referred to as a terminal, an electronic device, a communication device, or user equipment. Some examples of the terminal device are a mobile phone, a tablet, a palmtop computer, a wearable device, a mobile internet device (mobile internet device, MID), a virtual reality (virtual reality, VR) device, an augmented reality (augmented reality, AR) device, a terminal in a smart home (smart home), or the like.

For ease of description, this embodiment of this application is described by using an example in which there is one main processing unit and one auxiliary processing unit. The main processing unit is an AP, the auxiliary processing unit is an MCU, the terminal device is a smart watch, and a device that performs Bluetooth communication with the smart watch is a sports bicycle or a mobile phone.

To facilitate understanding of the technical solutions provided in embodiments of this application, the following describes concepts related to Bluetooth communication.

### 1. Classic Bluetooth, BR&EDR, and BLE

According to development of Bluetooth communication, Bluetooth communication may include a classic Bluetooth part and a BLE part. Generally, a Bluetooth protocol below the Bluetooth protocol standard 4.0 is mainly the classic Bluetooth part, and BLE corresponds to the Bluetooth protocol standard 4.0 or a later protocol version. BLE is developed based on classic Bluetooth. Classic Bluetooth is usually used for transmission of a large amount of data, for example, a voice or music. Compared with classic Bluetooth, BLE features low costs, low power consumption, and a high real-time requirement.

Classic Bluetooth further includes a basic rate (basic rate, BR) and an enhanced data rate (enhanced data rate, EDR). Compared with the BR, the EDR has a higher transmission rate, for example, may reach eight times the BR rate.

### 2. Bluetooth protocol stack

For example, FIG. 3 is a diagram of a structure of a Bluetooth protocol stack according to an embodiment of this application. As shown in FIG. 3, the Bluetooth protocol stack includes a host (Host), a controller (Controller), and a host controller interface (host controller interface, HCI). The HCI is used to standardize a communication protocol, a communication command, and the like between the host and the controller.

Generally, the host is deployed on a main processing unit (for example, an AP), and the controller is deployed on a BT chip.

For classic Bluetooth and BLE, related specific protocols are different.

### (1) Bluetooth protocol stack of classic Bluetooth

In classic Bluetooth, a controller may be represented as a BR/EDR controller, and includes a radio frequency (RF) layer, a baseband (Baseband) layer, and a link management protocol (link management protocol, LMP) layer. The radio frequency layer is configured to send or receive data and the like. The baseband layer is configured to perform modulation and demodulation on data, and the like. The link management protocol layer is configured to manage and control a link, and the like.

An upper-layer protocol in the host includes but is not limited to: a logical link control and adaptation protocol (logic link control and adaptation protocol, L2CAP), a radio frequency communication (radio frequency communication, RFCOMM) protocol, a service discovery protocol (service discovery protocol, SDP), and the like. For details, refer to related descriptions in the Bluetooth protocol.

### (2) Bluetooth protocol stack of BLE

In BLE, a controller may be represented as an LE controller or a BLE controller, and includes a physical layer (physical layer, PHY) and a link layer (link layer, LL). The physical layer is configured to: select a radio frequency band, a modulation and demodulation manner, receive and send data, and the like. The link layer is configured to: manage and control a link, determine a sending time of a data packet, select a radio frequency channel, implement feedback and retransmission of the data packet, and the like.

An upper-layer protocol in the host may include but is not limited to an L2CAP, an attribute protocol (attribute protocol, ATT), a generic attribute profile (generic attribute profile, GATT), and the like. For details, refer to related descriptions in the Bluetooth protocol.

Alternatively, the BR/EDR controller and the LE controller may be combined into one controller, that is, commonly known dual-mode Bluetooth.

### 3. Role, client, and server

In Bluetooth communication, a Bluetooth service includes two types (or roles), including a client (client) and a server (server).

Before the client communicates with the server, a connection needs to be established. Generally, a party that initiates a connection request is called a client, and a party that receives the connection request is called a server. After the connection is set up, the server can provide a data service. Before the client initiates the connection request, the server needs to be in a listening state to check whether the client requests to set up a connection. When the server detects the connection request from the client, the server can establish or reject the connection.

An example is used for description. For example, in the scenario shown in FIG. 1A, a Bluetooth service provided by the sports bicycle includes a power meter, a pedometer, and a rate meter. The rate meter is used as an example. The rate meter has two roles: a rate data server and a rate data reading client. When the sports bicycle communicates with the smart watch through Bluetooth, the smart watch serves as the rate data reading client to initiate a connection request to the sports bicycle. As the rate data server, the sports bicycle accepts the connection request and establishes a Bluetooth connection. Then, the sports bicycle may send rate data to the smart watch. Correspondingly, the smart watch displays rate information after processing.

For another example, in the scenario shown in FIG. 1B, both the mobile phone and the smart watch support a message notification service. The message notification service has two roles: a message notification server and a message notification client. The smart watch serves as the message notification client, and initiates a connection request to the mobile phone. Correspondingly, the mobile phone serves as the message notification server, accepts the connection request, and establishes a Bluetooth connection. Then, the mobile phone may send notification information to the smart watch. Correspondingly, the smart watch receives and processes the notification information, and displays the notification information.

For another example, in the scenario shown in FIG. 1C, the Health app is installed on both the mobile phone and the smart watch. A Health service has two roles: a Health server and a Health client. As the Health client, the mobile phone initiates a connection request to the smart watch. Correspondingly, as the Health server, the smart watch accepts the connection request and establishes a Bluetooth connection with the mobile phone.

It should be noted that, in Bluetooth communication, a device may serve as only a client, or serve as only a server, or serve as both a client and a server. This is related to factors such as software development of a Bluetooth service and a device type.

After a connection is established between the client and the server, the server may serve as a data sender to send data to the client, and correspondingly, the client serves as a data receiver to receive the data sent by the server; or the client serves as a data sender to send data to the server, and correspondingly, the server serves as a data receiver to receive the data sent by the client.

### 4. Logical channel management information of the Bluetooth service

After the client establishes the connection to the server, the terminal device serves as the client or the server, and may learn of a Bluetooth service supported by the terminal device. As the client, the terminal device may learn, through a process like service discovery, service query, or device query, of a Bluetooth service provided by the server. For the process like service discovery, service query, or device query, refer to the Bluetooth protocol.

The Bluetooth service has logical channel management information used to distinguish between different Bluetooth services.

In different Bluetooth communication manners, different Bluetooth protocols are used, and logical channel management information of the Bluetooth services is also different.

### (1) Logical channel management information of the Bluetooth service in classic Bluetooth

In classic Bluetooth, a socket (socket) connection is used between the client and the server of the Bluetooth service, which is also referred to as a BluetoothSocket connection. A BluetoothSocket connection process is implemented through the RFCOMM protocol. In the process of establishing the connection between the client and the server, a logical channel (channel) number of a logical channel corresponding to the Bluetooth service is related. An RFCOMM channel has a data link connection identifier (data link connection identifier, DLCI).

In classic Bluetooth, the logical channel management information of the Bluetooth service may include but is not limited to a universally unique identifier (universally unique identifier, UUID) of the Bluetooth service, a logical channel (channel) number of the Bluetooth service, a role of the Bluetooth service, and a DLCI of the Bluetooth service.

The role includes a client and a server.

The DLCI, and the logical channel number and the role have a conversion relationship. Based on the conversion relationship, the DLCI may be obtained through calculation based on the logical channel number and the role. Correspondingly, the logical channel number and the role that correspond to the DLCI may be obtained based on the DLCI. For the DLCI, refer to a Bluetooth-related protocol.

In this embodiment of this application, the DLCI may be used by the Bluetooth chip to filter and distinguish between different Bluetooth services, so that data of the different Bluetooth services can be sent to the main processing unit or the auxiliary processing unit for processing. Optionally, if the terminal device serves as the client of the Bluetooth service, the terminal device may obtain the logical channel number of the Bluetooth service from the server of the Bluetooth service. If the terminal device serves as the server of the Bluetooth service, the terminal device may directly obtain the logical channel number of the Bluetooth service.

An example is used for description. In the scenario shown in FIG. 1B, the Bluetooth service is a message notification service. The smart watch is the client of the message notification service, and the mobile phone is the server of the message notification service. The smart watch receives the logical channel number of the message notification service sent by the mobile phone. For the smart watch, the role is the client, and the DLCI may be obtained through calculation based on the logical channel number and the role (client) of the message notification service. The logical channel management information of the message notification service includes the logical channel number of the message notification service, the role (client) of the smart watch in the message notification service, and the DLCI.

### (2) Logical channel management information of the Bluetooth service in BLE.

BLE supports the GATT protocol. The client and server of the Bluetooth service are connected through the GATT protocol. In the GATT protocol, the Bluetooth service is described by using a data hierarchical structure.

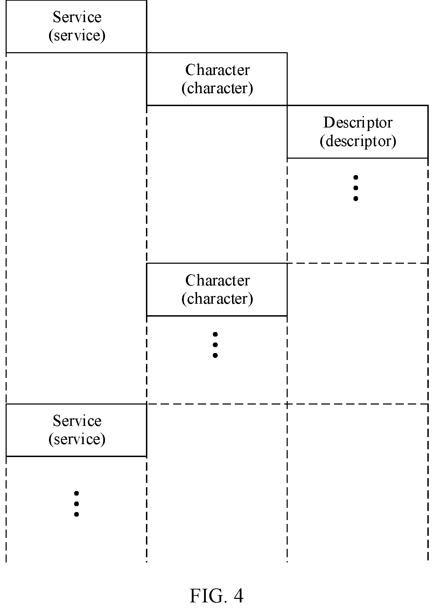

For example, FIG. 4 is a diagram of a GATT data structure according to an embodiment of this application. As shown in FIG. 4, there is at least one service (service), and each service (service) includes at least one character (character). The character (character) may include at least one descriptor (descriptor or description information); or the character (character) does not include a descriptor (descriptor).

The character (character) has a character property (property), for example, broadcast (broadcast), read (read), write (write), notify (notify), or indicate (indicate). It is assumed that a device A and a device B perform Bluetooth communication. The device B may indicate, through reading (read) and writing (write), the device A to request data from the device B. The device B may send data to the device A in a notification (notify) manner. Correspondingly, the device A receives the data reported by the device B in the notification (notify) manner.

Some character properties (property) can take effect only after being enabled, for example, notify (notify) and indicate (indicate). In this case, it may be described as that a character (character) needs to be enabled. Therefore, if a character property of a character (character) needs to be enabled, in other words, a character (character) needs to be enabled, the character (character) definitely includes a descriptor (descriptor), used by the client to enable or disable the character (character).

In BLE, the logical channel management information of the Bluetooth service includes but is not limited to a UUID of the Bluetooth service, and a logical channel index and a character property (property) of a character (character) included in the Bluetooth service. If the character (character) includes a descriptor (descriptor), the logical channel management information of the Bluetooth service further includes a logical channel index of the descriptor (descriptor) of the character (character). In some implementations, the logical channel index is also represented as a value handle (a value handle or the like) or an instance id (an instance identifier).

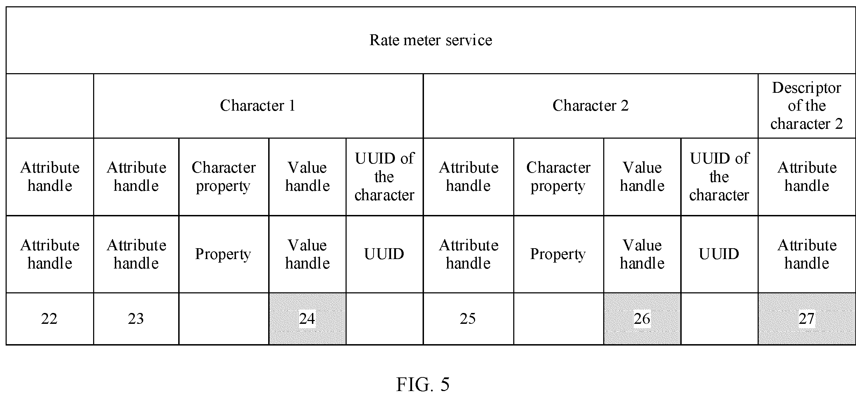

The following describes the logical channel management information of the Bluetooth service by using an example with reference to the scenario shown in FIG. 1A and FIG. 5, but does not constitute a limitation.

In the scenario shown in FIG. 1A, the Health app is installed on the smart watch. The Health app can process data of three services (services), where the three services (services) are a rate meter service (a service 1, a service 1), a power meter service (a service 2, a service 2), and a cadence meter service (a service 3, a service 3).

The rate meter service is used as an example. FIG. 5 is a diagram of logical channel management information of the rate meter service according to an embodiment of this application. The rate meter service includes two characters, which are identified as a character 1 and a character 2. The character 1 does not include a descriptor, and the character 2 includes a descriptor. In FIG. 5, there are two types of handle values: an attribute handle (attribute handle) and a value handle (value handle). A service (service), a character (character), and a descriptor (descriptor) each have an attribute handle (attribute handle), and have different values, to uniquely distinguish between different services, characters, or descriptors. For example, an attribute handle value of the rate meter service is 22, an attribute handle value of the character 1 in the rate meter service is 23, an attribute handle value of the character 2 in the rate meter service is 25, and an attribute handle value of the descriptor of the character 2 in the rate meter service is 27. A value handle (value handle) of a character (character) indicates a handle value corresponding to a value of the character. A character of the rate meter may be matched through an attribute handle (attribute handle), and a value of the character of the rate meter may be matched through a value handle (value handle). An example is used for description. It is assumed that the character 1 represents a speed value of the rate meter service. When the rate meter reports data, if the carried value handle value is 24, a specific value of the speed value of the rate meter may be obtained by parsing the data, for example, 27 km/h. Optionally, in some implementations, the descriptor (descriptor) has a value handle (value handle), and the value handle (value handle) of the descriptor (descriptor) is the same as the attribute handle (attribute handle) of the descriptor (descriptor).

As shown in FIG. 5, the attribute handle value of the rate meter service is 22. The rate meter service has two characters. The attribute handle value of the character 1 is 23, and the value handle value is 24. The attribute handle value of the character 2 is 25, and the value handle value is 26. A character property of the character 2 includes a notification (notify), and has a descriptor. The attribute handle (or value handle) value of the descriptor of the character 2 is 27.

The logical channel management information of the rate meter service may include: a UUID of the rate meter service, the logical channel index (the value is 24) and the character property of the character 1, the logical channel index (the value is 26) and the character property of the character 2, and the logical channel index (the value is 27) of the descriptor of the character 2.

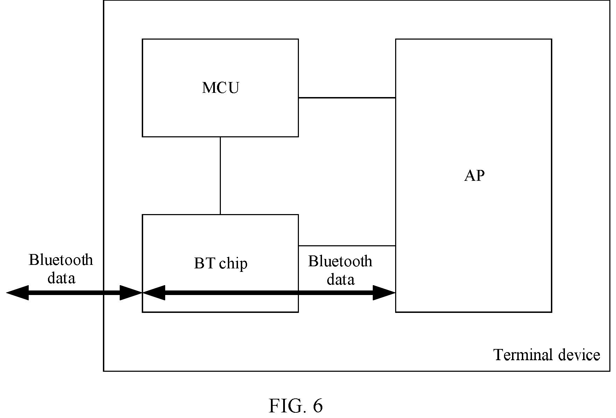

In a conventional technology, the Bluetooth service is deployed on a main processing unit (for example, an AP) of a terminal device. When the terminal device performs Bluetooth communication with another device, the AP processes Bluetooth data of the Bluetooth service. For example, FIG. 6 is a diagram of a principle of processing Bluetooth data by a terminal device according to an embodiment of this application. Refer to a thick solid line in FIG. 6. When the terminal device serves as a data receiver, a BT chip receives Bluetooth data, and then sends the Bluetooth data to an AP for processing. When the terminal device serves as a data sender, the AP performs protocol encapsulation on the Bluetooth data, and then sends the Bluetooth data to the BT chip, and the BT chip sends the received data. It can be learned that the AP is always in a working state. However, a large operating current of the AP increases power consumption of the terminal device. Especially in a scenario in which Bluetooth data is frequently transmitted, the terminal device remains in a high power consumption state for a long time, and a battery capacity of the terminal device is limited. Consequently, a battery life of the terminal device is significantly shortened.

With reference to the application scenarios shown in FIG. 1A and FIG. 1B, the following describes in detail processing of Bluetooth data by the terminal device in different Bluetooth communication manners of BLE and classic Bluetooth.

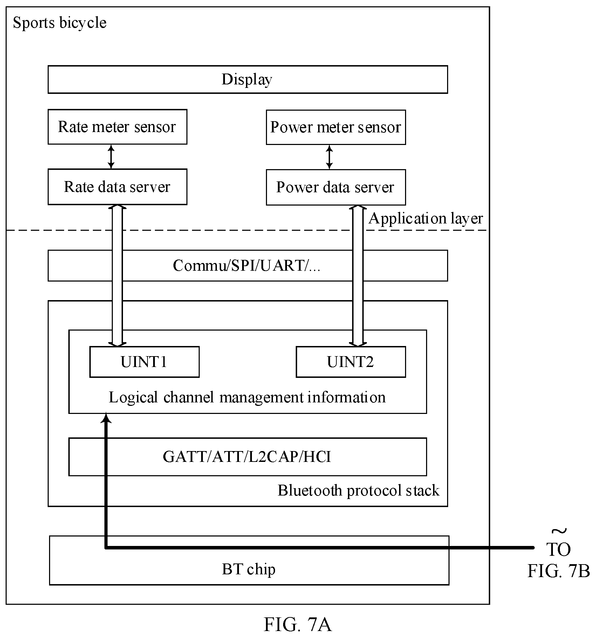

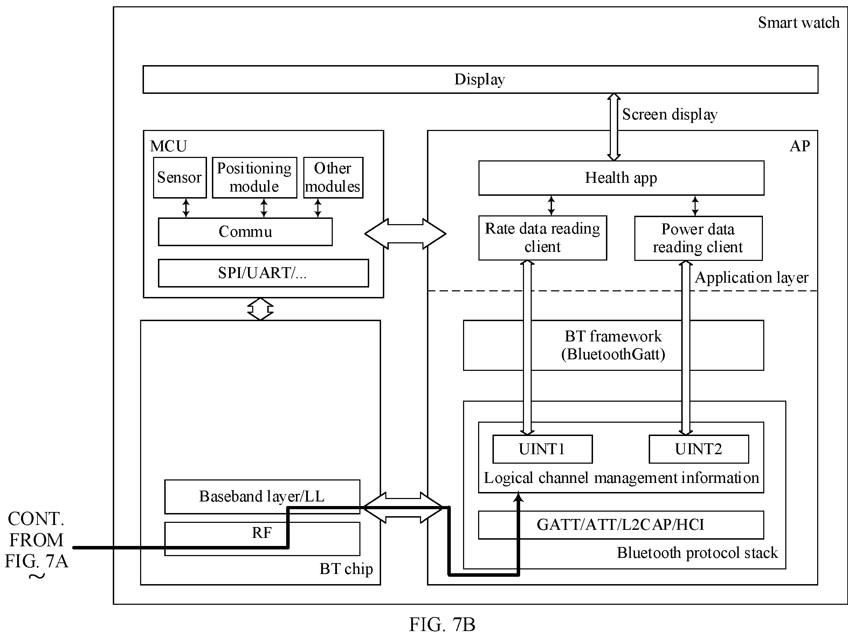

In an implementation, with reference to FIG. 1A, BLE communication is described. FIG. 7A and FIG. 7B are a diagram of a principle of processing Bluetooth data by a terminal device in BLE communication according to an embodiment of this application. It should be noted that FIG. 7A and FIG. 7B do not limit structures of a sports bicycle and a smart watch.

As shown in FIG. 7A and FIG. 7B, the sports bicycle includes a BT chip, a Bluetooth protocol stack, a transmission module, a Bluetooth service, a sensor, and a display. The sensors are a rate meter sensor and a power meter sensor. The Bluetooth service is deployed at an application layer, including a rate meter service and a power meter service. Specifically, the sports bicycle serves as a server of a Bluetooth service, and the Bluetooth service includes a rate data server and a power data server. The transmission module is configured to transmit data, and may include but is not limited to a Commu module, a universal asynchronous receiver/transmitter (universal asynchronous receiver/transmitter, UART), a serial peripheral interface (Serial Peripheral Interface, SPI), and the like. The Commu module may distribute service data. The UART is a universal serial data bus, and is used for asynchronous communication. The UART can perform bidirectional communication, and implement full-duplex transmission and reception. The SPI is a high-speed, full-duplex, and synchronous communication bus. The Bluetooth protocol stack shows some Bluetooth protocols and logical channel management information. In BLE, Bluetooth protocols include but are not limited to a GATT, an ATT, an L2CAP, and an HCI. In the logical channel management information, a logical channel management information identifier corresponding to the rate meter service is UINT1, and a logical channel management information identifier corresponding to the power meter service is UINT2.

As shown in FIG. 7A and FIG. 7B, the smart watch includes a BT chip, an MCU, an AP, and a display. The BT chip includes an RF module and a baseband layer/LL module. "/" indicates an "or" relationship. For details, refer to related descriptions of the foregoing Bluetooth protocol stack. The MCU includes a transmission module, a sensor, a positioning module, and other modules. The transmission module is configured to transmit data, and may include but is not limited to a Commu module, a UART, an SPI, and the like. The AP includes a Bluetooth protocol stack, a BT framework (interface), a Bluetooth service, and a Health app. The Health app is located at an application layer, that is, a third-party application, and may provide a plurality of Bluetooth services, for example, a rate meter service and a power meter service. In this example, the smart watch serves as a client of the Bluetooth service, including a rate data reading client and a power data reading client. The BT framework is configured to provide an API for an upper-layer application for invoking, so as to implement a Bluetooth capability. For example, the provided API includes BluetoothGatt. The Bluetooth protocol stack shows some Bluetooth protocols and logical channel management information. In BLE, Bluetooth protocols include but are not limited to a GATT, an ATT, an L2CAP, and an HCI. In the logical channel management information, a logical channel management information identifier corresponding to the rate meter service is UINT1, and a logical channel management information identifier corresponding to the power meter service is UINT2.

In this implementation, after the sports bicycle is powered on, the sports bicycle first registers with a BLE GATT SERVER server, to listen to a connection of the client. Subsequently, the sports bicycle initiates a BLE connectable broadcast. After the smart watch runs the Health app, the Health app invokes a BLE scanning API provided by the BT framework to scan for a nearby BLE device. The BT chip starts scanning, obtains a scanning result, and sends the scanning result to the AP. The Bluetooth protocol stack parses the scanning result and sends a callback notification to the Health app. The Health app obtains the scanning result, and obtains information, for example, a device broadcast name of the sports bicycle and a media access control (media access control, MAC) address of the device. A user can initiate a connection to the sports bicycle through an operation in a related interface of the Health app. Correspondingly, the Health app invokes connectGATT provided by the BT framework to initiate a logical channel connection. After a connection status is called back, the Health app queries the Bluetooth service provided by the sports bicycle through a discovery service provided by the BT framework, to obtain the logical channel management information of the Bluetooth service. After the Health app enables a data reporting service for the sports bicycle, the sports bicycle can report related data to the smart watch. As shown by a thick solid line in FIG. 7A and FIG. 7B, when the smart watch is used as a data receiver, after receiving Bluetooth data sent by the sports bicycle, the BT chip of the smart watch directly sends the Bluetooth data to the AP for processing. After processing the Bluetooth data, the AP may send the Bluetooth data to the display, to implement screen display. When the smart watch serves as a data sender, the AP processes Bluetooth data and sends the processed data to the BT chip, and the BT chip sends, to the sports bicycle, the data received from the AP.

In an actual application scenario, when the user exercises by using the sports bicycle, the sports bicycle continuously generates fitness data and reports the fitness data to the smart watch. Consequently, the AP of the smart watch is always in a working state, power consumption is high, and a battery life of the smart watch is shortened.

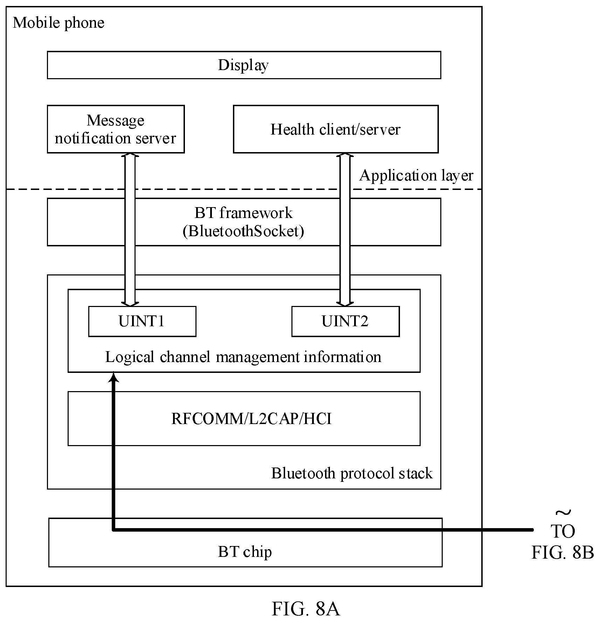

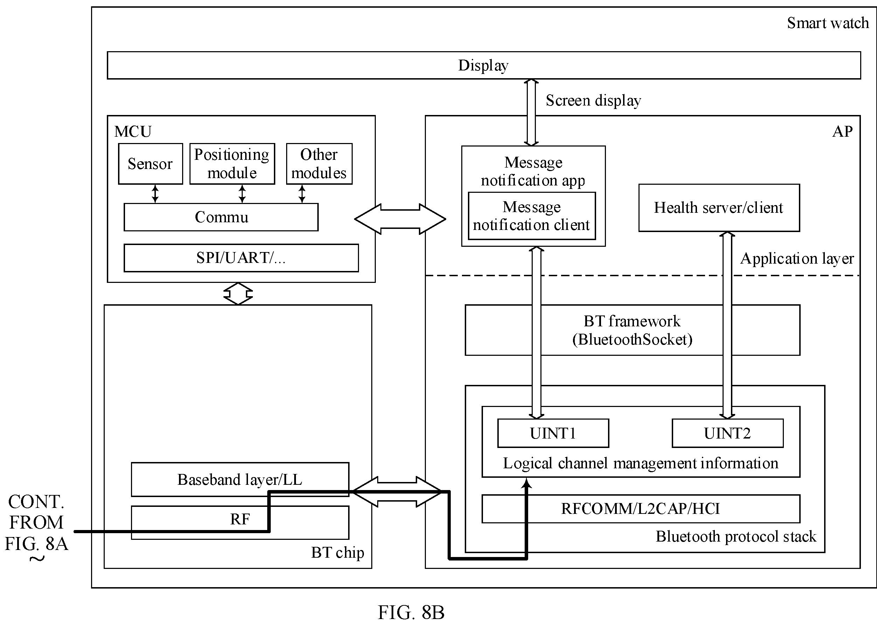

In another implementation, with reference to FIG. 1B, classic Bluetooth communication is described. FIG. 8A and FIG. 8B are a diagram of a principle of processing Bluetooth data by a terminal device in classic Bluetooth according to an embodiment of this application. It should be noted that FIG. 8A and FIG. 8B do not limit structures of the mobile phone and the smart watch. As shown in FIG. 8A and FIG. 8B, the mobile phone includes a BT chip, a Bluetooth protocol stack, a BT framework, a Bluetooth service, and a display. The Bluetooth service is deployed at an application layer, and shows a message notification service and a Health service. The mobile phone serves as a server of the message notification service, including a message notification server. The mobile phone may further serve as a client or a server of the Health service, including a Health client/server. A BT framework is configured to provide an API for an upper-layer application for invoking, so as to implement a Bluetooth communication capability. For example, the provided API includes BluetoothSocket. The Bluetooth protocol stack shows some Bluetooth protocols and logical channel management information. In classic Bluetooth, Bluetooth protocols include but are not limited to RFCOMM, an L2CAP, and an HCI. In the logical channel management information, a logical channel management information identifier corresponding to the message notification service is UINT1, and a logical channel management information identifier corresponding to the Health service is UINT2.

A structure of the smart watch provided in FIG. 8A and FIG. 8B is similar to that of the smart watch provided in FIG. 7A and FIG. 7B, and details are not described herein again. A difference lies in that Bluetooth communication manners are different, used Bluetooth protocols are different, APIs provided by the BT framework are different, and implemented Bluetooth services are different. In FIG. 8A and FIG. 8B, classic Bluetooth communication is supported. Bluetooth protocols include the RFCOMM, the L2CAP, and the HCI. The APIs provided by the BT framework include BluetoothSocket and the like. The Bluetooth services include the message notification service and the Health service. The smart watch serves as a client of the message notification service, including a message notification client. The smart watch may further serve as a server or a client of the Health service, including a Health server/client.

In this implementation, the message notification server on the mobile phone creates a listening server socket through BluetoothServerSocket, to listen to a connection request of the client. When a connection request from the client is detected and accepted, one BluetoothSocket is returned to manage a connection. The message notification client on the smart watch initiates and manages a connection through a single BluetoothSocket. Specifically, the message notification client initiates establishment of a Bluetooth RFCOMM channel by invoking a BluetoothSocket connect interface provided by the BT framework. After the message notification server on the mobile phone and the message notification client on the smart watch establish a connection, the BluetoothSocket is used to send and receive messages and data.

As shown by a thick solid line in FIG. 8A and FIG. 8B, when there is a notification message on the mobile phone, the mobile phone sends the notification message to the smart watch, so that the smart watch displays the notification message. The smart watch serves as a data receiver. A BT chip of the smart watch receives the notification message sent by the mobile phone, and directly sends the notification message to the AP for processing. After processing the notification message, the AP may send the notification message to the display, to implement screen display.

In an actual application scenario, the mobile phone receives a notification message irregularly. The mobile phone continuously reports the notification message to the smart watch. As a result, the AP of the smart watch is always in a working state, power consumption is high, and a battery life of the smart watch is shortened.

An embodiment of this application provides a Bluetooth data processing method. A main processing unit (for example, the AP) on the terminal device may offload some Bluetooth services to an auxiliary processing unit (for example, an MCU) for management, and the some Bluetooth services may be referred to as offload (offload) services. Necessary data of the offload service needs to be synchronized among the main processing unit, the auxiliary processing unit, and the BT chip. The Bluetooth chip has a capability of parsing, encapsulating, and filtering Bluetooth data of the offload service. In this way, when the terminal device serves as a data receiver, after receiving the Bluetooth data, the BT chip parses the Bluetooth data, and sends the Bluetooth data to the auxiliary processing unit for processing when determining that the Bluetooth data is data of the offload service, or sends the Bluetooth data to the main processing unit for processing when determining that the Bluetooth data is not data of the offload service. When the terminal device serves as a data sender, for an offload service, the auxiliary processing unit may send data of the offload service to the BT chip, and the BT chip encapsulates and sends the data. It can be learned that, according to the Bluetooth data processing method provided in this embodiment of this application, the auxiliary processing unit processes some Bluetooth data, and offloads the Bluetooth data that originally needs to be processed by the main processing unit, so that working time of the main processing unit is shortened, power consumption of the terminal device is reduced, and a battery life of the terminal device is prolonged.

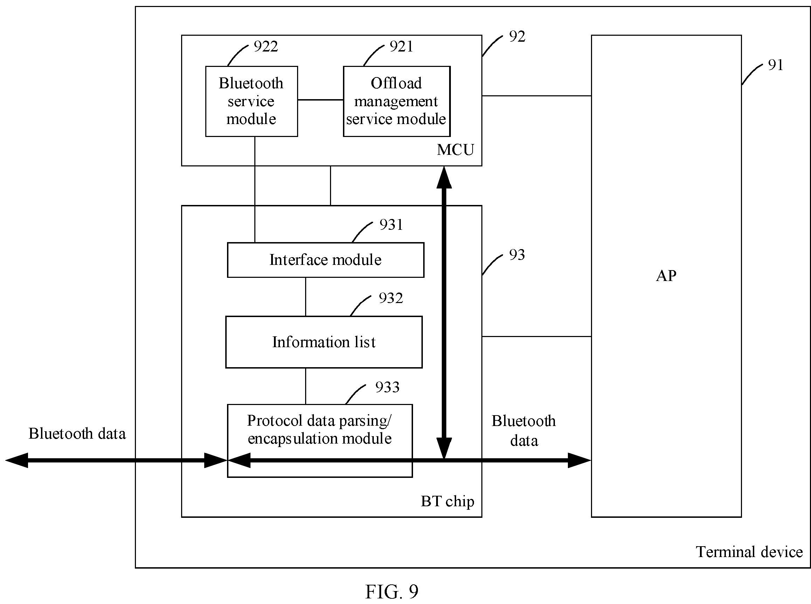

For example, FIG. 9 is a diagram of another principle of processing Bluetooth data by a terminal device according to an embodiment of this application. As shown in FIG. 9, the terminal device includes an AP 91, an MCU 92, and a BT chip 93. The MCU 92 includes an offload management service module 921 and a Bluetooth service module 922. The BT chip 93 includes: an interface module 931, an information list 932, and a protocol data parsing/encapsulation module 933.

The offload management service module 921 is configured to communicate with the AP 91, and provide an API interface for an upper-layer application for invoking. For example, the API interface may include a data synchronization interface, a data synchronization cancellation interface, and the like. The data synchronization interface is used to synchronize first service information of an offload service between the AP 91 and the MCU 92. The data synchronization cancellation interface is used to cancel synchronization of the first service information of the offload service between the AP 91 and the MCU 92. The offload management service module 921 is further configured to communicate with the Bluetooth service module 922, and may invoke an API provided by the Bluetooth service module 922.

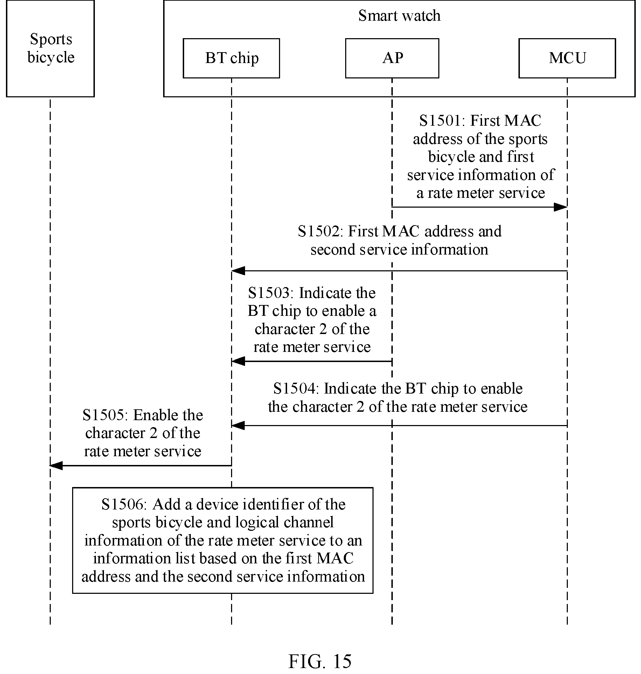

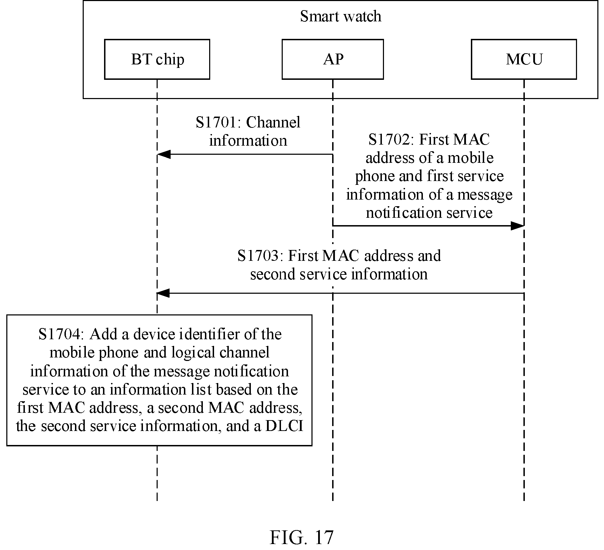

The Bluetooth service module 922 is configured to communicate with the offload management service module 921 and the BT chip 93, to implement communication between the MCU 92 and the BT chip 93. The Bluetooth service module 922 may provide the API interface for the offload management service module 921 for invoking. For example, the API interface includes but is not limited to at least one of the following: a virtual connection interface, a registration interface, a service enabling interface, a read interface, a write interface, or a callback interface. When Bluetooth communication manners are different, for example, classic Bluetooth and BLE, the Bluetooth service module 922 provides different API interfaces. For details, refer to the descriptions in embodiments shown in FIG. 15 and FIG. 17.

The interface module 931 is configured to communicate with the Bluetooth service module 922, to implement communication between the MCU 92 and the BT chip 93. The interface module 931 may provide an API interface. The API interface includes but is not limited to at least one of the following: a virtual connection interface, a registration interface, a service enabling interface, a read interface, a write interface, or a callback interface. When Bluetooth communication manners are different, API interfaces provided by the interface module 931 are different. For details, refer to the descriptions in embodiments shown in FIG. 15 and FIG. 17.

The information list 932 is used to store a device identifier of a target device that performs Bluetooth communication with the terminal device, and store logical channel information of the offload service.

The protocol data parsing/encapsulation module 933 is configured to parse the Bluetooth data received by the BT chip 93, determine, based on the device identifier and the logical channel information that are stored in the information list 932, whether the received Bluetooth data belongs to the offload service, and if the received Bluetooth data belongs to the offload service, send the received Bluetooth data to the MCU 92 for processing; or if the received Bluetooth data does not belong to the offload service, send the received Bluetooth data to the AP 91 for processing. The protocol data parsing/encapsulation module 933 is further configured to encapsulate the data of the offload service that is received from the MCU 92, and then send the encapsulated data to the target device.

There is an inter-core communication interface between the AP 91, the MCU 92, and the BT chip 93. Communication between the AP 91 and the BT chip 93 may be implemented through a communication interface between the AP 91 and the BT chip 93, or may be implemented through the MCU 92.

The following describes in detail technical solutions of this application by using specific embodiments. The following embodiments may be combined with each other, and same or similar concepts or processes may not be repeatedly described in some embodiments.

Terms "first", "second", "third", "fourth", and the like (if any) in embodiments of this application are used to distinguish between similar objects, but not necessarily describe a specific order or sequence.

It should be noted that, in this embodiment of this application, the Bluetooth service and the service represent a same meaning.

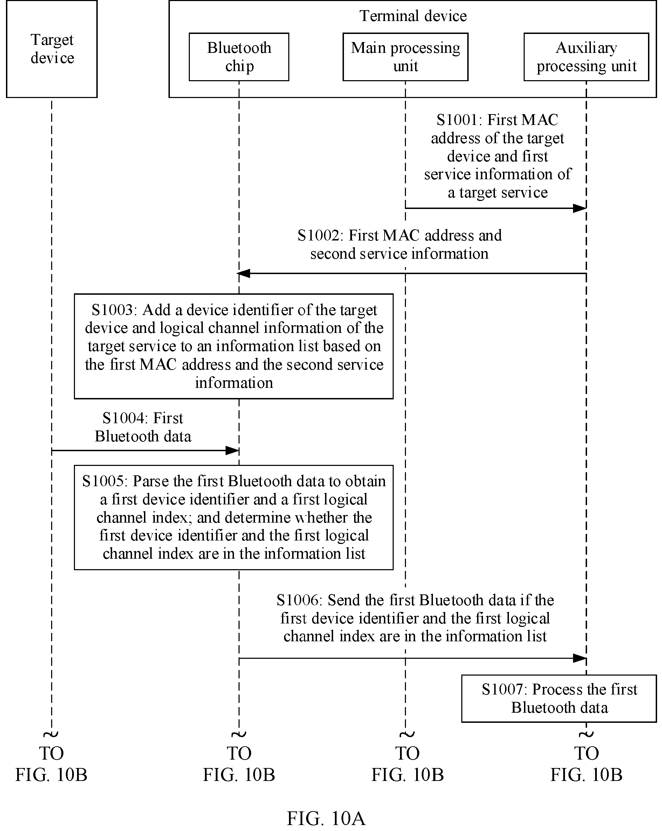

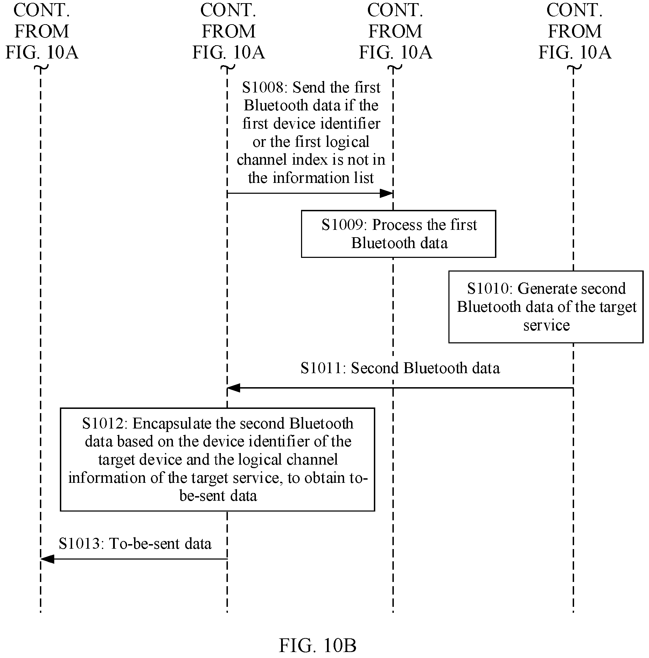

FIG. 10A and FIG. 10B are a flowchart of a Bluetooth data processing method according to an embodiment of this application. The Bluetooth data processing method provided in this embodiment may be executed by a terminal device. The terminal device includes a main processing unit, an auxiliary processing unit, and a Bluetooth chip. A Bluetooth connection has been established between the terminal device and a target device. A name and a type of the target device are not limited in this embodiment. For example, in the scenario shown in FIG. 1A, the terminal device is a smart watch, and the target device is a sports bicycle. In the scenario shown in FIG. 1B, the terminal device is a smart watch, and the target device is a mobile phone. In the scenario shown in FIG. 1C, the terminal device is a mobile phone, and the target device is a smart watch. After the terminal device establishes the Bluetooth connection to the target device, the Bluetooth chip records connection information. The connection information includes but is not limited to an asynchronous connection-oriented link (asynchronous connection-oriented link, ACL) identifier and a MAC address of the target device. The terminal device may further learn of Bluetooth services supported by the terminal device and the target device.

As shown in FIG. 9, and FIG. 10A and FIG. 10B, the Bluetooth data processing method provided in this embodiment may include the following steps.

S1001: The main processing unit sends a first MAC address of the target device and first service information of a target service to the auxiliary processing unit.

Correspondingly, the auxiliary processing unit receives the first MAC address and the first service information that are sent by the main processing unit.

The first service information is used by the auxiliary processing unit to process Bluetooth data of the target service.

According to the Bluetooth data processing method provided in this embodiment of this application, data transmitted among the main processing unit, the auxiliary processing unit, and the Bluetooth chip includes the MAC address of the target device. For ease of differentiation, the MAC address of the target device sent by the main processing unit to the auxiliary processing unit is referred to as the first MAC address.

Specifically, the terminal device or the target device may support a plurality of Bluetooth services. In the plurality of Bluetooth services, a Bluetooth service deployed on the auxiliary processing unit of the terminal device for processing is referred to as the target service, or may be referred to as an offload (offload) service. Optionally, the target service is a service provided by a server. Optionally, when the terminal device serves as a client and the target device serves as a server, the terminal device may learn of, through a process like service discovery, service query, or device query, the Bluetooth service supported by the target device. The target service is the Bluetooth service supported by the target device. Optionally, when the terminal device serves as a server, the target service is the Bluetooth service supported by the terminal device.

Optionally, all or some Bluetooth data of the target service may be deployed on the auxiliary processing unit for processing. For example, in BLE communication, the Bluetooth service includes at least one character (character). All characters (characters) included in the Bluetooth service may be deployed on the auxiliary processing unit. Alternatively, some characters (characters) in the Bluetooth service may be deployed on the auxiliary processing unit.

Different manners in which the terminal device and the target device perform Bluetooth communication indicate different Bluetooth protocols and different first service information.

Optionally, in BLE, the target service includes at least one character. The first service information includes a UUID of the target service, and a logical channel index and a character property of a target character in the at least one character. For details, refer to the foregoing related descriptions of the logical channel management information of the Bluetooth service in this application. The first service information is used by the auxiliary processing unit to process Bluetooth data of the target character. In other words, the target character in the target service is deployed on the auxiliary processing unit of the terminal device for processing. A quantity of target characters is not limited in this embodiment.

Optionally, it is assumed that the target character needs to be enabled. In an implementation, if the target character is not enabled by the main processing unit, the first service information further includes a logical channel index of a descriptor of the target character. The logical channel index of the descriptor of the target character is used to enable the target character.

In this implementation, the target character needs to be enabled, and both the main processing unit and the auxiliary processing unit can enable the target character. If the target character is not enabled by the main processing unit, the auxiliary processing unit needs to enable the target character. The first service information needs to include the logical channel index of the descriptor of the target character, so that the auxiliary processing unit enables the target character. If the target character has been enabled by the main processing unit, the first service information does not need to include the logical channel index of the descriptor of the target character, so that repeated enabling of the target character by the main processing unit and the auxiliary processing unit is avoided.

Optionally, it is assumed that the target character needs to be enabled. In another implementation, the first service information further includes a logical channel index of a descriptor of the target character.

In this implementation, the target character needs to be enabled. Regardless of whether the main processing unit has enabled the target character, the first service information may include the logical channel index of the descriptor of the target character. The auxiliary processing unit may enable the target character based on the logical channel index of the descriptor of the target character. In this implementation, the main processing unit and the auxiliary processing unit may repeatedly enable the target character.

Optionally, the main processing unit may send enabling information to the auxiliary processing unit, to indicate whether the main processing unit enables the target character. The main processing unit and the auxiliary processing unit are prevented from repeatedly enabling the target character through the enabling information.

Optionally, the enabling information may be included in the first service information. This reduces a quantity of times of data transmission between the main processing unit and the auxiliary processing unit.

Optionally, in classic Bluetooth, the first service information includes a logical channel number of the target service and a role of the target service, where the role is a client or a server. For details, refer to the foregoing related descriptions of the logical channel management information of the Bluetooth service in this application.

Optionally, in classic Bluetooth, the first service information may further include a UUID of the target service.

It should be noted that the terminal device may serve as a client of the target service, or may serve as a server of the target service. Correspondingly, the target device serves as the server of the target service, or serves as the client of the target service. For example, an application scenario may be as follows: The terminal device serves as the client of the target service, the target device serves as the server of the target service, and the target service is the Bluetooth service supported by the target device. The target device may send data of the target service to the terminal device. The terminal device may also send the data of the target service to the target device. For another example, an application scenario may be as follows: The terminal device serves as the server of the target service, the target device serves as the client of the target service, and the target service is the Bluetooth service supported by the terminal device. The terminal device may send the data of the target service to the target device. The target device may also send the data of the target service to the terminal device.

Optionally, with reference to FIG. 9, the offload management service module 921 may invoke an API interface, for example, a data synchronization interface, to enable the main processing unit to send the first MAC address and the first service information to the auxiliary processing unit. S1002: The auxiliary processing unit sends the first MAC address and second service information to the Bluetooth chip.

The second service information is some or all of the first service information.

Correspondingly, the Bluetooth chip receives the first MAC address and the second service information that are sent by the auxiliary processing unit.

Optionally, in BLE, the second service information includes a logical channel index and a character property of a target character in at least one character included in the target service.

Optionally, if the target character needs to be enabled, the second service information may further include a logical channel index of a descriptor of the target character. Refer to the descriptions in S1001. Details are not described herein again.

Optionally, the second service information may further include a UUID of the target service. Optionally, in classic Bluetooth, the second service information includes a logical channel number of the target service and a role of the target service, where the role is a client or a server. Optionally, the second service information may further include a UUID of the target service. It should be noted that, if the first service information does not include the UUID of the target service, the second service information does not include the UUID of the target service. If the first service information includes the UUID of the target service, the second service information may include the UUID of the target service, or may not include the UUID of the target service.

Optionally, with reference to FIG. 9, the offload management service module 921, the Bluetooth service module 922, and the interface module 931 may invoke a related API interface to enable the auxiliary processing unit to send the first MAC address and the second service information to the Bluetooth chip.

S1003: The Bluetooth chip adds the device identifier of the target device and the logical channel information of the target service to an information list based on the first MAC address and the second service information, where the device identifier of the target device and the logical channel information of the target service are used by the Bluetooth chip to process the Bluetooth data of the target service.

Then, the Bluetooth chip and the auxiliary processing unit may process the Bluetooth data of the target service.

Specifically, the device identifier is used by the Bluetooth chip, and may be used to uniquely distinguish between different devices. Optionally, the device identifier of the target device includes an identifier of an ACL link of the Bluetooth connection between the target device and the terminal device. Optionally, the ACL link identifier may be represented as an ACL handle (handle).

The logical channel information of the service may be used to uniquely distinguish between different Bluetooth services in all Bluetooth services supported by a device. For the logical channel information of the target service, if the target service is a Bluetooth service supported by the target device, the target service may be uniquely identified, through the logical channel information of the target service, from all the Bluetooth services supported by the target device. If the target service is a Bluetooth service supported by the terminal device, the target service may be uniquely identified, through the logical channel information of the target service, from all the Bluetooth services supported by the terminal device.

Optionally, there is an association relationship between the logical channel information of the target service and the device identifier of the target device. An example is used for description. In BLE communication, a Bluetooth service is described by using a hierarchical structure of "application-service-character-descriptor", as shown in FIG. 4 and FIG. 5. For each device, sorting is internally performed in an attribute handle (attribute handle) of a service, a character, and a descriptor, causing same logical channel information of different services supported by different devices. For example, an attribute handle (attribute handle) range of a rate meter service supported by a device 1 is 21 to 30, an attribute handle (attribute handle) range of a power meter service is 31 to 40, and a value handle (value handle) value of a character 1 in the rate meter service is 25. An attribute handle (attribute handle) range of a power meter service supported by a device 2 is 21 to 30, and a value handle (value handle) value of a character 1 in the power meter service is 25. It can be learned that, for a value handle (value handle) of 25, the device 1 and the device 2 correspond to different services and characters. The device 1 corresponds to the character 1 of the rate meter service, and the device 2 corresponds to the character 1 of the power meter service. Therefore, there may be the association relationship between the logical channel information of the target service and the device identifier of the target device, and different services of different devices may be uniquely distinguished through the device identifier of the target device and the logical channel information of the target service.

Different manners in which the terminal device and the target device perform Bluetooth communication indicate different Bluetooth protocols and different logical channel information of the target service.

Optionally, in BLE, the logical channel information of the target service includes a logical channel index and a character property of a target character in at least one character included in the target service.

Optionally, if the target character needs to be enabled, the logical channel information of the target service may further include a logical channel index of a descriptor of the target character. Refer to the descriptions in S1001. Details are not described herein again.

Optionally, in classic communication, the logical channel information of the target service includes a DLCI of the target service. In this implementation, the DLCI of the target service may also be referred to as a logical channel index of the target service.

In this embodiment, the information list is used to store the device identifier of the target device and the logical channel information of the target service. An implementation of the information list is not limited in this embodiment. The information list may be a data list or a file in a preset format, may be one data list or a plurality of data lists, or may be one file or a plurality of files. Optionally, the information list includes a device list and an offload service list. The device list includes the device identifier of the target device. The offload service list includes the logical channel information of the target service. Optionally, the offload service list may further include the device identifier of the target device, and may indicate the association relationship between the device identifier of the target device and the logical channel information of the target service.

Optionally, in BLE, that the Bluetooth chip adds the device identifier of the target device and the logical channel information of the target service to an information list based on the first MAC address and the second service information may include:
The Bluetooth chip determines the device identifier of the target device based on the first MAC address.

The Bluetooth chip determines the logical channel information of the target service based on the second service information.

The Bluetooth chip adds the device identifier of the target device and the logical channel information of the target service to the information list.

Specifically, in BLE, the main processing unit sends the first MAC address and the first service information to the auxiliary processing unit, and the auxiliary processing unit sends the first MAC address and the second service information to the Bluetooth chip. The Bluetooth chip may obtain an ACL handle of the target device based on the first MAC address, and determine the logical channel information of the target service based on the second service information.

Optionally, in classic Bluetooth communication, before the Bluetooth chip adds the device identifier of the target device and the logical channel information of the target service to the information list based on the first MAC address and the second service information, the method further includes:
The main processing unit sends channel information to the Bluetooth chip. The channel information includes a second MAC address of the target device and the DLCI of the target service.

Correspondingly, that the Bluetooth chip adds the device identifier of the target device and the logical channel information of the target service to an information list based on the first MAC address and the second service information includes:
The Bluetooth chip adds the device identifier of the target device and the logical channel information of the target service to the information list based on the first MAC address, the second service information, the second MAC address, and the DLCI.

Optionally, that the Bluetooth chip adds the device identifier of the target device and the logical channel information of the target service to the information list based on the first MAC address, the second service information, the second MAC address, and the DLCI includes:
If the first MAC address is the same as the second MAC address, the Bluetooth chip determines the device identifier of the target device based on the first MAC address or the second MAC address.

The Bluetooth chip obtains a to-be-compared logical channel number and a to-be-compared role based on the DLCI.

If the to-be-compared logical channel number is the same as the logical channel number of the target service, and the to-be-compared role is the same as the role of the target service, the Bluetooth chip determines the DLCI as the logical channel information of the target service. The Bluetooth chip adds the device identifier of the target device and the DLCI to the information list.

Optionally, the channel information may further include a UUID of the target service.

Specifically, in classic Bluetooth, a Bluetooth protocol stack obtains a DLCI of a service through calculation based on at least a logical channel number and a role of the service. In other words, other information is further required for calculating the DLCI. When the other information is different, DLCIs corresponding to a same logical channel number and role may be different. The main processing unit sends the second MAC address of the target device and the DLCI of the target service to the Bluetooth chip. The main processing unit sends the first MAC address of the target device and the first service information of the target service to the auxiliary processing unit, and the auxiliary processing unit sends the first MAC address and the second service information to the Bluetooth chip. For ease of differentiation, a MAC address of the target device sent by the main processing unit to the auxiliary processing unit is referred to as the first MAC address, and a MAC address of the target device sent by the main processing unit to the Bluetooth chip is referred to as the second MAC address. When the first MAC address and the second MAC address are the same, it indicates that the first MAC address and the second MAC address correspond to a same target device, and the Bluetooth chip may determine the ACL handle of the target device based on the first MAC address or the second MAC address. The Bluetooth chip obtains the to-be-compared logical channel number and the to-be-compared role through calculation based on the DLCI received from the main processing unit. If the to-be-compared logical channel number is the same as the logical channel number of the target service that is received from the auxiliary processing unit, and the to-be-compared role is the same as the role of the target service received from the auxiliary processing unit, the Bluetooth chip determines that the DLCI received from the main processing unit is the logical channel information of the target service.

It can be learned that, according to the Bluetooth data processing method provided in this embodiment, the main processing unit of the terminal device may offload some Bluetooth services to the auxiliary processing unit for processing. The main processing unit and the auxiliary processing unit synchronize the MAC address of the target device and the first service information of the target service, and the auxiliary processing unit and the Bluetooth chip transmit the MAC address of the target device and the second service information of the target service, so that the auxiliary processing unit and the Bluetooth chip learn that the target service is processed on the auxiliary processing unit. Subsequently, the auxiliary processing unit and the Bluetooth chip may process the Bluetooth data of the target service. According to the Bluetooth data processing method provided in this embodiment, some or all of Bluetooth data of the Bluetooth service processed by the main processing unit is transferred to the auxiliary processing unit for processing, so that data splitting is formed, and working time of the main processing unit is shortened. Because power consumption of the auxiliary processing unit is less than that of the main processing unit, power consumption of the terminal device is reduced, and a battery life of the terminal device is prolonged. Optionally, the Bluetooth data processing method provided in this embodiment may further include the following steps.

S1004: The Bluetooth chip receives first Bluetooth data.

S1005: The Bluetooth chip parses the first Bluetooth data to obtain a first device identifier and a first logical channel index; and determines whether the first device identifier and the first logical channel index are in the information list.

If the first device identifier and the first logical channel index are in the information list, it indicates that the first Bluetooth data is the Bluetooth data of the target service and needs to be processed by the auxiliary processing unit. In this case, S1006 and S1007 are performed.

If the first device identifier or the first logical channel index is not in the information list, it indicates that the first Bluetooth data is not the Bluetooth data of the target service and needs to be processed by the main processing unit. In this case, S1008 and S1009 are performed.

S1006: The Bluetooth chip sends the first Bluetooth data to the auxiliary processing unit.

S1007: The auxiliary processing unit processes the first Bluetooth data.

S1008: The Bluetooth chip sends the first Bluetooth data to the main processing unit.

S1009: The main processing unit processes the first Bluetooth data.

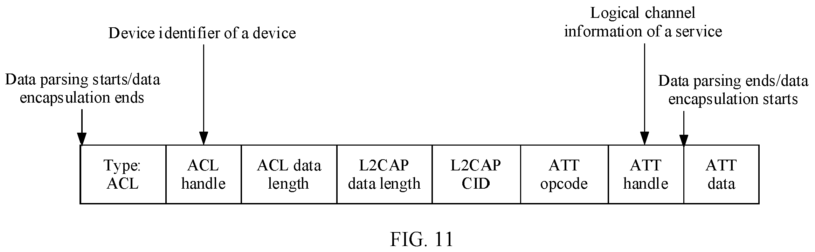

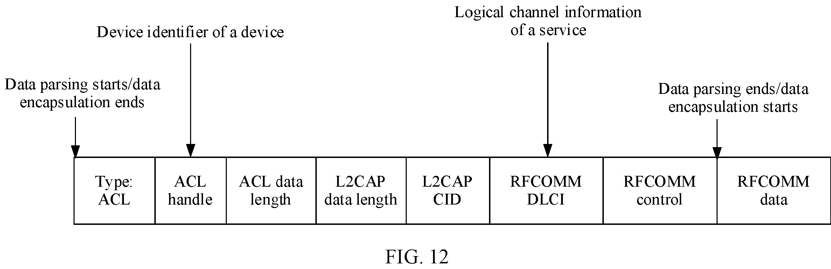

In this implementation, the terminal device serves as a data receive end, and receives and processes the Bluetooth data sent by the target device. Specifically, the Bluetooth chip of the terminal device has a protocol data parsing capability. For example, the protocol data parsing/encapsulation module 933 shown in FIG. 9 obtains the first device identifier and the first logical channel index from the first Bluetooth data through parsing, and determines, based on the information list, whether the first Bluetooth data belongs to the data of the target service. If the first Bluetooth data is the data of the target service, the first Bluetooth data is processed by the auxiliary processing unit, so that energy consumption of the terminal device is reduced, and a battery life is prolonged. The following describes protocol data parsing/encapsulation by using examples with reference to FIG. 11 and FIG. 12. However, FIG. 11 and FIG. 12 do not constitute a limitation on a data structure.

For example, FIG. 11 shows a data structure in BLE communication according to an embodiment of this application. As shown in FIG. 11, GATT data includes a type (TYPE), an ACL handle (ACL HANDLE), an ACL data length (ACL DATA LENGTH), an L2CAP data length (L2CAP DATA LENGTH), an L2CAP CID (communication identifier, communication identifier), ATT opcode (ATT OPCODE), an ATT handle (ATT Handle), and ATT data (ATT DATA). The type is specifically an ACL.

Locations indicated by four arrows in FIG. 11 are sequentially: a location at which data parsing starts/data encapsulation ends, a location at which a device identifier is located, a location at which logical channel information is located, and a location at which data parsing ends/data encapsulation starts.

For example, FIG. 12 shows a data structure in classic Bluetooth communication according to an embodiment of this application. As shown in FIG. 12, RFCOMM data includes a type (TYPE), an ACL handle (ACL HANDLE), an ACL data length (ACL DATA LENGTH), an L2CAP data length (L2CAP DATA LENGTH), an L2CAP CID, an RFCOMM DLCI, RFCOMM control (RFCOMM CONTROL), and RFCOMM data (RFCOMM DATA). The type is specifically an ACL. Locations indicated by four arrows in FIG. 12 are sequentially: a location at which data parsing starts/data encapsulation ends, a location at which a device identifier is located, a location at which logical channel information is located, and a location at which data parsing ends/data encapsulation starts.

Optionally, the Bluetooth data processing method provided in this embodiment may further include the following steps.

S1010: The auxiliary processing unit generates second Bluetooth data of the target service. S1011: The auxiliary processing unit sends the second Bluetooth data to the Bluetooth chip. S1012: The Bluetooth chip encapsulates the second Bluetooth data based on the device identifier of the target device and the logical channel information of the target service, to obtain to-be-sent data.

S1013: The Bluetooth chip sends the to-be-sent data to the target device.

In this implementation, the terminal device serves as a data transmit end to send the data of the target service to the target device. Specifically, after processing the data of the target service, the auxiliary processing unit sends the second Bluetooth data to the Bluetooth chip. The Bluetooth chip has a protocol data encapsulation capability. For example, the protocol data parsing/encapsulation module 933 shown in FIG. 9 encapsulates the second Bluetooth data based on the information list and then sends the encapsulated second Bluetooth data to the target device. The auxiliary processing unit processes the data of the target service, so that energy consumption of the terminal device is reduced, and a battery life is prolonged.

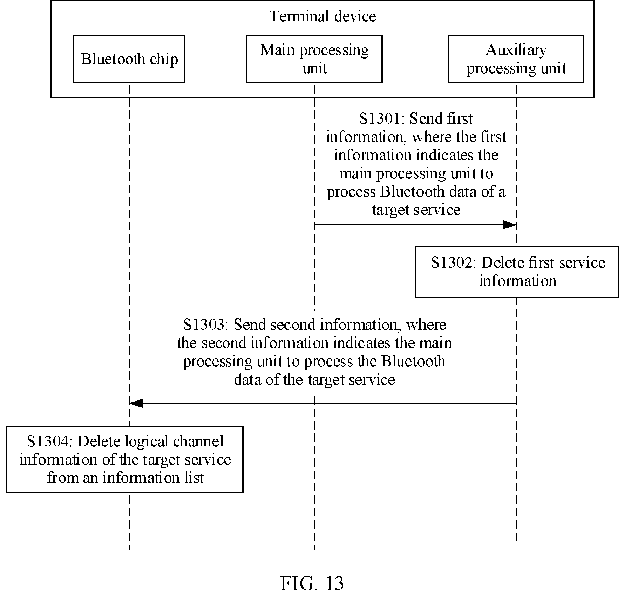

Optionally, FIG. 13 is a flowchart of another Bluetooth data processing method according to an embodiment of this application. As shown in FIG. 13, the Bluetooth data processing method provided in this embodiment may further include the following steps.

S1301: A main processing unit sends first information to an auxiliary processing unit. The first information indicates the main processing unit to process Bluetooth data of the target service. Optionally, the first information may include a first MAC address of a target device and first service information of the target service.

Optionally, as shown in FIG. 9, the offload management service module 921 may invoke an API interface, for example, a data cancellation synchronization interface, to enable the main processing unit to send the first information to the auxiliary processing unit.

S1302: The auxiliary processing unit deletes the first service information based on the first information.

Optionally, the auxiliary processing unit further deletes the first MAC address based on the first information.

S1303: The auxiliary processing unit sends second information to the Bluetooth chip. The second information indicates the main processing unit to process the Bluetooth data of the target service. Optionally, the second information may include the first MAC address of the target device and second service information of the target service.

Optionally, as shown in FIG. 9, the offload management service module 921, the Bluetooth service module 922, and the interface module 931 may implement, by invoking a related API interface, that the auxiliary processing unit sends the second information to the Bluetooth chip.

S1304: The Bluetooth chip deletes logical channel information of the target service from an information list based on the second information.

Optionally, the Bluetooth chip further deletes a device identifier of the target device based on the second information.

In this implementation, the target service may be redeployed on the main processing unit. Therefore, the related information of the target service needs to be deleted between the main processing unit, the auxiliary processing unit, and the Bluetooth chip, so that the main processing unit can process the Bluetooth data of the target service. In this implementation, a Bluetooth service that needs to be processed may be flexibly arranged on the main processing unit and the auxiliary processing unit.

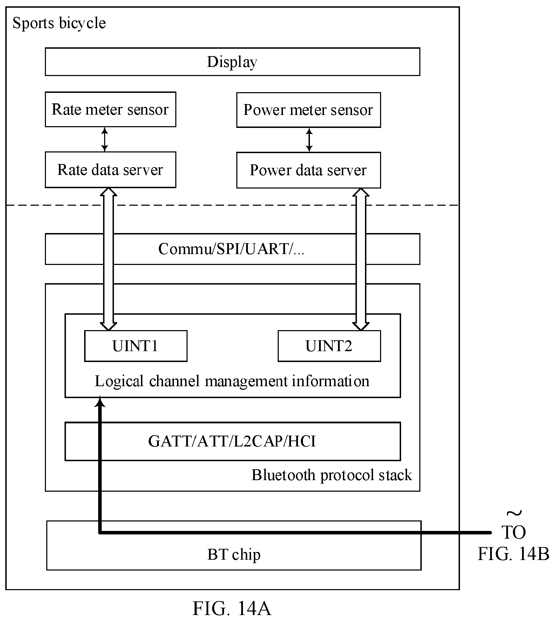

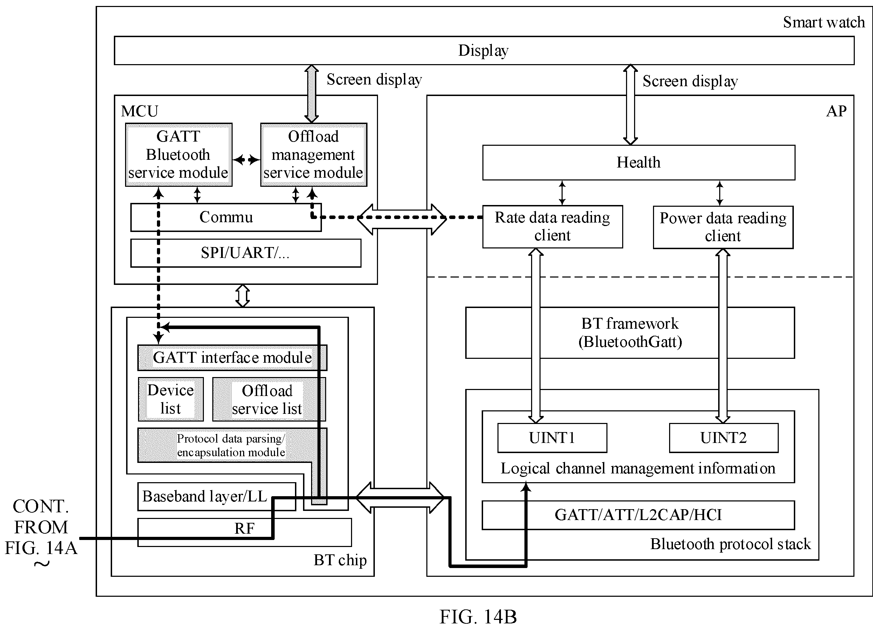

Optionally, based on the foregoing embodiments, with reference to the scenario shown in FIG. 1A, another embodiment of this application provides an implementation of a Bluetooth data processing method in BLE communication. FIG. 14A and FIG. 14B are a diagram of another principle of processing Bluetooth data by a terminal device in BLE communication according to an embodiment of this application. FIG. 15 is still another flowchart of a Bluetooth data processing method according to an embodiment of this application.

As shown in FIG. 9 and FIG. 14A and FIG. 14B, in BLE communication, the offload management service module 921 corresponds to the offload management service module in FIG. 14A and FIG. 14B, the Bluetooth service module 922 corresponds to the GATT Bluetooth service module in FIG. 14A and FIG. 14B, and the interface module 931 corresponds to the GATT interface module in FIG. 14A and FIG. 14B. The information list 932 corresponds to the device list and the offload service list in FIG. 14A and FIG. 14B, and the protocol data parsing/encapsulation module 933 corresponds to the protocol data parsing/encapsulation module in FIG. 14A and FIG. 14B. APIs provided by the offload management service module, the GATT Bluetooth service module, and the GATT interface module execute the GATT protocol.

A difference between FIG. 7A and FIG. 7B and FIG. 14A and FIG. 14B is that a thick solid line and a thick dashed line in FIG. 14A and FIG. 14B show a data flow direction in a Bluetooth data processing process. In FIG. 7A and FIG. 7B, in the smart watch, the AP processes data of a Bluetooth service, and the BT chip does not parse/encapsulate the data. However, in FIG. 14A and FIG. 14B, in the smart watch, a target service is deployed on an MCU. When the smart watch serves as a data receiver, after receiving the Bluetooth data sent by the sports bicycle, the BT chip of the smart watch parses the data to determine whether the data belongs to data of the target service. If the data belongs to the data of the target service, the data is sent to the MCU for processing, and the MCU implements screen display of the data of the target service data. If the data does not belong to the data of the target service, the data is sent to the AP for processing, and the AP implements screen display. When the smart watch serves as a data sender, the MCU processes the Bluetooth data of the target service and sends the processed data to the BT chip, and the BT chip encapsulates the data and sends the encapsulated data to the sports bicycle.

In this embodiment, the terminal device is a smart watch, and the target device is a sports bicycle. The target service is a rate meter service. As shown in FIG. 5, the rate meter service includes a character 1 and a character 2. The character 1 (the character 1) does not need to be enabled, and the character 2 (the character 2) needs to be enabled. A logical channel index of the character 1 is a value handle 24. A logical channel index of the character 2 is a value handle 26, and a logical channel index of a descriptor of the character 2 is a value handle 27.

Optionally, in an implementation, the target character is the character 1 of the rate meter service, and does not need to be enabled. As shown in FIG. 15, the Bluetooth data processing method includes the following steps.

S1501: An AP sends a first MAC address of a sports bicycle and first service information of a rate meter service to an MCU.

The first service information includes a UUID of the rate meter service, and the logical channel index (the value handle 24) and a character property (property) of the character 1.

S1502: The MCU sends the first MAC address and the second service information to the BT chip. The second service information includes the logical channel index (the value handle 24) and the character property (property) of the character 1.

Optionally, the second service information may further include the UUID of the rate meter service. S1506: The BT chip adds the device identifier of the sports bicycle and the logical channel information of the rate meter service to the information list based on the first MAC address and the second service information.

The logical channel information of the rate meter service includes the logical channel index (the value handle 24) and the character property (property) of the character 1.

Optionally, in another implementation, the target character is the character 2 of the rate meter service, and needs to be enabled. The AP has enabled the character 2, and the MCU does not need to enable the character 2. As shown in FIG. 15, the Bluetooth data processing method includes the following steps.

S1501: An AP sends a first MAC address of a sports bicycle and first service information of a rate meter service to an MCU.

The first service information includes a UUID of the rate meter service, and the logical channel index (the value handle 26) and a character property (property) of the character 2.

S1502: The MCU sends the first MAC address and the second service information to the BT chip. The second service information includes the logical channel index (the value handle 26) and the character property (property) of the character 2.

Optionally, the second service information may further include the UUID of the rate meter service. S1503: The AP indicates the BT chip to enable the character 2 of the rate meter service.

S1505: The BT chip enables the character 2 of the rate meter service.

S1506: The BT chip adds the device identifier of the sports bicycle and the logical channel information of the rate meter service to the information list based on the first MAC address and the second service information.

The logical channel information of the rate meter service includes the logical channel index (the value handle 26) and the character property (property) of the character 2.

A sequence of performing S1503, S1505, S1501, S1502, and S1506 is not limited in this implementation.

Optionally, in still another implementation, the target character is the character 2 of the rate meter service, and needs to be enabled. The AP does not enable the character 2, and the MCU needs to enable the character 2. As shown in FIG. 15, the Bluetooth data processing method includes the following steps.

S1501: An AP sends a first MAC address of a sports bicycle and first service information of a rate meter service to an MCU.

The first service information includes a UUID of the rate meter service, a logical channel index (a value handle 26) and a character property (property) of the character 2, and a logical channel index (a value handle 27) of a descriptor of the character 2.

S1502: The MCU sends the first MAC address and the second service information to the BT chip. The second service information includes the logical channel index (the value handle 26) and the character property (property) of the character 2, and the logical channel index (the value handle 27) of the descriptor of the character 2.

Optionally, the second service information may further include the UUID of the rate meter service. S1504: The MCU indicates the BT chip to enable the character 2 of the rate meter service. S1505: The BT chip enables the character 2 of the rate meter service.

S1506: The BT chip adds the device identifier of the sports bicycle and the logical channel information of the rate meter service to the information list based on the first MAC address and the second service information.

The logical channel information of the rate meter service includes the logical channel index (the value handle 26) and the character property (property) of the character 2, and the logical channel index (the value handle 27) of the descriptor of the character 2.

A sequence of performing S1504, S1505, and S1506 is not limited in this implementation.

Optionally, in this embodiment, the API provided by the GATT Bluetooth service module may include but is not limited to at least one of the following: a GATT virtual connection interface, a character& descriptor writing interface, a characteristic reading interface, an offload service information registration interface (needing characteristic information of an offload service), a GATT callback interface (including a connection event, a characteristic change event, a characteristic callback event, and the like), or a service enabling interface. The GATT interface module in the BT chip may include a corresponding peer interface.

Optionally, in S1502, an implementation in which the MCU sends the first MAC address and the second service information to the BT chip may include: The offload management service module invokes the GATT virtual connection interface provided by the GATT Bluetooth service module to initiate a virtual connection, and notifies the BT chip of the MAC address of the sports bicycle through inter-core communication, to indicate the MCU to prepare to receive data of the offload service of the sports bicycle. It should be noted that, because the Health app on the AP side has completed connection to an actual physical channel of the sports bicycle, the connection initiated herein is to indicate the BT chip to add a device identifier of the sports bicycle to the device list, so that the BT chip can subsequently filter and identify data of the sports bicycle. Therefore, the connection is called a virtual connection. After the MCU obtains a result of calling back the virtual connection (for example, may indicate whether the device identifier of the sports bicycle is successfully added to the device list), the offload management service module invokes the offload service information registration interface provided by the GATT Bluetooth service module, and notifies the BT chip of information (the second service information) such as the handle and the property of the character and the descriptor of the rate meter service.

Subsequently, after obtaining the second service information, the BT chip may add the second service information to an offload service list.

Optionally, in S1504, an implementation in which the MCU indicates the BT chip to enable the character 2 of the rate meter service may include: The offload management service module invokes the service enabling interface provided by the GATT Bluetooth service module, to indicate the BT chip to enable the character of the rate meter service.

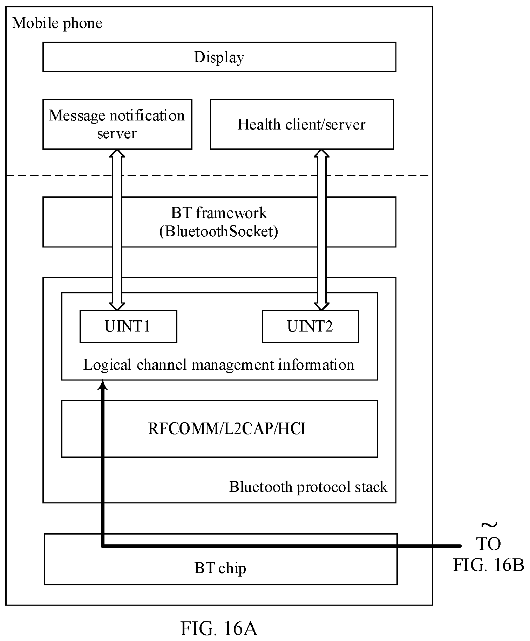

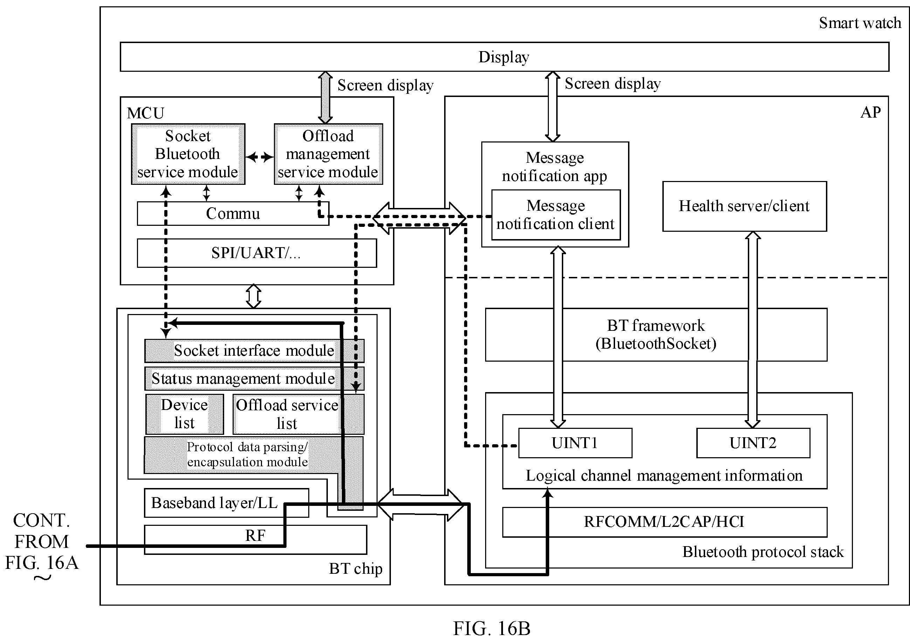

Optionally, based on the foregoing embodiment, with reference to the scenario shown in FIG. 1B, still another embodiment of this application provides an implementation of a Bluetooth data processing method in classic Bluetooth communication. FIG. 16A and FIG. 16B are a diagram of another principle of processing Bluetooth data by a terminal device in classic Bluetooth according to an embodiment of this application. FIG. 17 is still another flowchart of a Bluetooth data processing method according to an embodiment of this application.

As shown in FIG. 9 and FIG. 16A and FIG. 16B, in classic Bluetooth communication, the offload management service module 921 corresponds to the offload management service module in FIG. 16A and FIG. 16B, the Bluetooth service module 922 corresponds to the Socket Bluetooth service module in FIG. 16A and FIG. 16B, the interface module 931 corresponds to the Socket interface module in FIG. 16A and FIG. 16B, the information list 932 corresponds to the device list and the offload service list in FIG. 16A and FIG. 16B, and the protocol data parsing/encapsulation module 933 corresponds to the protocol data parsing/encapsulation module in FIG. 14A and FIG. 14B. APIs provided by the offload management service module, the Socket Bluetooth service module, and the Socket interface module execute the RFCOMM protocol.

Optionally, in FIG. 16A and FIG. 16B, the BT chip may further include a status management module, configured to maintain a status of the BT chip, for example, a chip sniff status or RFCOMM channel flow control.

In this embodiment, the terminal device is a smart watch, and the target device is a mobile phone. The target service is a message notification service. The mobile phone serves as a server of the message notification service. The smart watch serves as a client of the message notification service, that is, a role is a client.

As shown in FIG. 17, the Bluetooth data processing method may include the following steps. S1701: An AP sends channel information to a BT chip.

The channel information includes a second MAC address of a mobile phone and a DLCI of a message notification service.

Optionally, the channel information may further include a UUID of the message notification service. For example, as shown in FIG. 16A and FIG. 16B, when sending the channel information to the BT chip by using the MCU, the AP needs to carry the UUID of the message notification service.

S1702: The AP sends a first MAC address of the mobile phone and first service information of the message notification service to the MCU.

The first service information includes a logical channel number of the message notification service and a role (specifically, a client) of the message notification service.

Optionally, the first service information may further include the UUID of the message notification service.

S1703: The MCU sends the first MAC address and second service information to the BT chip. The second service information includes the logical channel number of the message notification service and the role (specifically, the client) of the message notification service.

Optionally, the second service information may further include the UUID of the message notification service.

S1704: The BT chip adds a device identifier of the mobile phone and logical channel information of the message notification service to an information list based on the first MAC address, the second MAC address, the second service information, and the DLCI.

It should be noted that, for the Bluetooth data processing methods provided in this embodiment in the BLE communication manner shown in FIG. 14A and FIG. 14B and FIG. 15 and the classic Bluetooth communication manner shown in FIG. 16A and FIG. 16B and FIG. 17, newly added modules and method processes in the terminal device are similar, and reference may be made to each other. A difference lies in that in BLE communication, there is a character enabling process. However, in classic Bluetooth, the BT chip and the AP need to transmit channel data, and do not need to enable a service.

It may be understood that, to implement the foregoing functions, the terminal device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the terminal device may be divided into functional modules based on the foregoing method examples. For example, each functional module may be obtained through division based on each corresponding function, or two or more functions may be integrated into one module. It should be noted that, in embodiments of this application, module division is an example, and is merely a logical function division. In actual implementation, another division manner may be used. It should be noted that a name of a module in embodiments of this application is an example, and the name of the module is not limited during actual implementation.

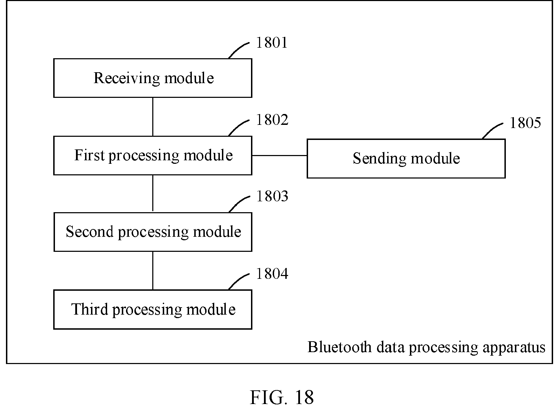

For example, FIG. 18 is a diagram of a structure of a Bluetooth data processing apparatus according to an embodiment of this application. The Bluetooth data processing apparatus is applied to a terminal device. As shown in FIG. 18, the Bluetooth data processing apparatus may include:
a receiving module 1801, configured to receive first Bluetooth data;
a first processing module 1802, configured to send the first Bluetooth data to a second processing module 1803 when determining that the first Bluetooth data meets a preset condition; and
the second processing module 1803, configured to process the first Bluetooth data. Optionally, the first processing module 1802 is configured to:
   parse the first Bluetooth data to obtain a first device identifier and a first logical channel index;
   if the first device identifier and the first logical channel index are in an information list, determine that the first Bluetooth data meets the preset condition, where the information list is used to store a device identifier of a target device and logical channel information of a target service, and the second processing module 1803 is configured to process Bluetooth data of the target service.

Optionally, the first processing module 1802 is further configured to:
send the first Bluetooth data to a third processing module 1804 if the first device identifier or the first logical channel index is not in the information list.

The third processing module 1804 is configured to process the first Bluetooth data.

Optionally, the second processing module 1803 is further configured to:
generate second Bluetooth data of the target service, and send the second Bluetooth data to the first processing module 1802.

The first processing module 1802 is further configured to:
encapsulate the second Bluetooth data to obtain to-be-sent data; and
A sending module 1805 is further included, configured to send the to-be-sent data to the target device.

Optionally, the third processing module 1804 is further configured to:
before the receiving module 1801 receives the first Bluetooth data, send a first MAC address of the target device and first service information of the target service to the second processing module 1803, where the target device is a device that communicates with the terminal device through Bluetooth, and the first service information is used by the second processing module 1803 to process the Bluetooth data of the target service.

The second processing module 1803 is further configured to send the first MAC address and second service information to the first processing module 1802, where the second service information is some or all of the first service information.

The first processing module 1802 is further configured to add the device identifier of the target device and the logical channel information of the target service to the information list based on the first MAC address and the second service information, where the device identifier of the target device and the logical channel information of the target service are used by the first processing module 1802 to process the Bluetooth data of the target service.

Optionally, the device identifier of the target device includes an ACL identifier.

Optionally, the terminal device and the target device support a GATT protocol, and the target service includes at least one character.

The first service information, the second service information, and the logical channel information of the target service include a logical channel index and a character property of a target character in the at least one character.

The first service information further includes a UUID of the target service, and the first service information is used by the second processing module 1803 to process the Bluetooth data of the target character.

Optionally, the target character needs to be enabled.

The first service information, the second service information, and the logical channel information of the target service further include a logical channel index of a descriptor of the target character. Optionally, the target character is not enabled by the third processing module 1804.

Optionally, the third processing module 1804 and/or the second processing module 1803 are/is further configured to:
enable the target character before the receiving module 1801 receives the first Bluetooth data.

Optionally, the terminal device and the target device support an RFCOMM protocol.

The first service information and the second service information include a logical channel number of the target service and a role of the target service, where the role is a client or a server. Optionally, the first service information further includes a UUID of the target service. Optionally, the third processing module 1804 is further configured to:
send channel information to the first processing module 1802, where the channel information includes a second MAC address of the target device and a DLCI of the target service. The first processing module 1802 is configured to:
add the device identifier of the target device and the logical channel information of the target service to the information list based on the first MAC address, the second service information, the second MAC address, and the DLCI.

Optionally, the first processing module 1802 is configured to:
if the first MAC address is the same as the second MAC address, determine the device identifier of the target device based on the first MAC address or the second MAC address;
obtain a to-be-compared logical channel number and a to-be-compared role based on the DLCI;
if the to-be-compared logical channel number is the same as the logical channel number of the target service, and the to-be-compared role is the same as the role of the target service, determine the DLCI as the logical channel information of the target service; and
add the device identifier of the target device and the DLCI to the information list. Optionally, the third processing module 1804 is further configured to:
   send first information to the second processing module 1803, where the first information indicates the third processing module 1804 to process the Bluetooth data of the target service.

The second processing module 1803 is further configured to:
delete the first service information based on the first information, and send second information to the first processing module 1802, where the second information indicates the third processing module 1804 to process the Bluetooth data of the target service.

The first processing module 1802 is further configured to:
delete the logical channel information of the target service from the information list based on the second information.

Optionally, the information list includes a device list and an offload service list, the device list includes the device identifier of the target device, and the offload service list includes the device identifier of the target device and the logical channel information of the target service. Optionally, the terminal device is a client of the target service, and the target device is a server of the target service.

The Bluetooth data processing apparatus provided in this embodiment is configured to perform the Bluetooth data processing method provided in embodiments of this application. Technical principles and technical effects are similar. Details are not described herein again.

Optionally, in an implementation, refer to FIG. 18 and FIG. 9. The first processing module may include an interface module 931, an information list 932, and a protocol data parsing/encapsulation module 933. The second processing module may include the offload management service module 921 and the Bluetooth service module 922.

An embodiment of this application further provides a computer program product. When the computer program product runs on a device, the device is enabled to perform the technical solutions in the foregoing embodiments. Implementation principles and technical effects of the computer program product are similar to those in the foregoing related embodiments. Details are not described herein again.

An embodiment of this application provides a computer-readable storage medium. The computer-readable storage medium stores program instructions. When the program instructions are executed by a device, the device is enabled to perform the technical solution in the foregoing embodiment.

An implementation principle and a technical effect thereof are similar to those of the foregoing related embodiment, and details are not described herein again.

In conclusion, the foregoing embodiments are merely intended for describing the technical solutions of this application, but not for limiting this application.

## Claims

1. A Bluetooth data processing method, applied to a terminal device, wherein the terminal device comprises a main processing unit, an auxiliary processing unit offloading processing from the main processing unit, and a Bluetooth chip, and the method comprises:
receiving (S1004), by the Bluetooth chip, first Bluetooth data;
sending (S1006), by the Bluetooth chip, the first Bluetooth data to the auxiliary processing unit if the Bluetooth chip determines that the first Bluetooth data meets a preset condition; and
processing (S1007), by the auxiliary processing unit, the first Bluetooth data;
wherein before the receiving, by the Bluetooth chip, first Bluetooth data, the method further comprises:
sending (S1001), by the main processing unit, a first media access control MAC address of a target device and first service information of a target service to the auxiliary processing unit, wherein the target device is a device that communicates with the terminal device through Bluetooth, and the first service information is used by the auxiliary processing unit to process the Bluetooth data of a target service;
sending (S1002), by the auxiliary processing unit, the first MAC address and second service information to the Bluetooth chip, wherein the second service information is some or all of the first service information; and
adding (S1003), by the Bluetooth chip, a device identifier of the target device and logical channel information of the target service to an information list based on the first MAC address and the second service information, wherein the device identifier of the target device and the logical channel information of the target service from the information list are used by the Bluetooth chip .to determine whether the first Bluetooth data meets the preset condition and accordingly process the Bluetooth data of the target service by the auxiliary processing unit.

2. The method according to claim 1, wherein that the Bluetooth chip determines that the first Bluetooth data meets a preset condition further comprises:
parsing, by the Bluetooth chip, the first Bluetooth data to obtain a first device identifier and a first logical channel index; and
if the first device identifier and the first logical channel index are in an information list, determining, by the Bluetooth chip, that the first Bluetooth data meets the preset condition, wherein the information list is used to store a device identifier of a target device and logical channel information of a target service, and the auxiliary processing unit is configured to process Bluetooth data of the target service.

3. The method according to claim 2, wherein the method further comprises:
sending, by the Bluetooth chip, the first Bluetooth data to the main processing unit if the first device identifier or the first logical channel index is not in the information list; and
processing, by the main processing unit, the first Bluetooth data.

4. The method according to claim 1, wherein the method further comprises:
generating, by the auxiliary processing unit, second Bluetooth data of a target service;
sending, by the auxiliary processing unit, the second Bluetooth data to the Bluetooth chip;
encapsulating, by the Bluetooth chip, the second Bluetooth data to obtain to-be-sent data; and
sending, by the Bluetooth chip, the to-be-sent data to a target device.

5. The method according to any one of claims 1 to 4, wherein the device identifier of the target device comprises an asynchronous connection-oriented link ACL identifier.

6. The method according to any one of claims 1 to 4, wherein the terminal device and the target device support a generic attribute profile GATT, and the target service comprises at least one character;
the first service information, the second service information, and the logical channel information of the target service comprise a logical channel index and a character property of a target character in the at least one character; and
the first service information further comprises a universally unique identifier UUID of the target service, and the first service information is used by the auxiliary processing unit to process Bluetooth data of the target character.

7. The method according to claim 6, wherein the target character needs to be enabled; and
the first service information, the second service information, and the logical channel information of the target service further comprise a logical channel index of a descriptor of the target character.

8. The method according to claim 7, wherein the target character is not enabled by the main processing unit.

9. The method according to claim 7 or 8, wherein before the receiving, by the Bluetooth chip, first Bluetooth data, the method further comprises:
enabling, by the main processing unit and/or the auxiliary processing unit, the target character.

10. The method according to any one of claims 1 to 4, wherein the terminal device and the target device support a radio frequency communication RFCOMM protocol; and
the first service information and the second service information comprise a logical channel number of the target service and a role of the target service, wherein the role is a client or a server.

11. The method according to claim 10, wherein the first service information further comprises a UUID of the target service.

12. The method according to claim 10, wherein before the adding, by the Bluetooth chip, the device identifier of the target device and the logical channel information of the target service to the information list based on the first MAC address and the second service information, the method further comprises:
sending, by the main processing unit, channel information to the Bluetooth chip, wherein the channel information comprises a second MAC address of the target device and a data link connection identifier DLCI of the target service; and
the adding, by the Bluetooth chip, the device identifier of the target device and the logical channel information of the target service to the information list based on the first MAC address and the second service information comprises:
adding, by the Bluetooth chip, the device identifier of the target device and the logical channel information of the target service to the information list based on the first MAC address, the second service information, the second MAC address, and the DLCI.

13. The method according to claim 12, wherein the adding, by the Bluetooth chip, the device identifier of the target device and the logical channel information of the target service to the information list based on the first MAC address, the second service information, the second MAC address, and the DLCI comprises:
determining, by the Bluetooth chip, the device identifier of the target device based on the first MAC address or the second MAC address if the first MAC address is the same as the second MAC address;
obtaining, by the Bluetooth chip, a to-be-compared logical channel number and a to-be-compared role based on the DLCI;
if the to-be-compared logical channel number is the same as the logical channel number of the target service, and the to-be-compared role is the same as the role of the target service, determining, by the Bluetooth chip, the DLCI as the logical channel information of the target service; and
adding the device identifier of the target device and the DLCI to the information list.

14. A terminal device, comprising a processor and a Bluetooth chip, wherein the processor comprises a main processing unit and an auxiliary processing unit, the processor is coupled to a memory, and the processor executes a computer program stored in the memory, to implement the method according to any one of claims 1 to 13.

15. A computer-readable storage medium, wherein the computer-readable storage medium stores computer instructions, and when the computer instructions are run on a device, the device is enabled to perform the method according to any one of claims 1 to 13.

## Patentansprüche

1. Verfahren zum Verarbeiten von Bluetooth-Daten, angewandt auf ein Endgerät, wobei das Endgerät eine Hauptverarbeitungseinheit, eine Hilfsverarbeitungseinheit, die Verarbeitung von der Hauptverarbeitungseinheit übernimmt, und einen Bluetooth-Chip umfasst und das Verfahren Folgendes umfasst:
Empfangen (S1004), durch den Bluetooth-Chip, von ersten Bluetooth-Daten;
Senden (S1006), durch den Bluetooth-Chip, der ersten Bluetooth-Daten an die Hilfsverarbeitungseinheit, wenn der Bluetooth-Chip bestimmt, dass die ersten Bluetooth-Daten eine im Voraus eingestellte Bedingung erfüllen; und
Verarbeiten (S1007), durch die Hilfsverarbeitungseinheit, der ersten Bluetooth-Daten;
wobei das Verfahren vor dem Empfangen, durch den Bluetooth-Chip, von ersten Bluetooth-Daten fernes Folgendes umfasst:
Senden (S1001), durch die Hauptverarbeitungseinheit, einer ersten Medienzugangssteuerung- bzw. MAC-Adresse eines Zielgeräts und von ersten Dienstinformationen eines Zieldienstes an die Hilfsverarbeitungseinheit, wobei das Zielgerät ein Gerät ist, das mit dem Endgerät durch Bluetooth kommuniziert, und die ersten Dienstinformationen durch die Hilfsverarbeitungseinheit verwendet werden, die Bluetooth-Daten eines Zieldienstes zu verarbeiten;
Senden (S1002), durch die Hilfsverarbeitungseinheit, der ersten MAC-Adresse und von zweiten Dienstinformationen an den Bluetooth-Chip, wobei die zweiten Dienstinformationen einige oder sämtliche der ersten Dienstinformationen sind; und
Hinzufügen (S1003), durch den Bluetooth-Chip, einer Gerätekennung des Zielgeräts und von Logikkanalinformationen des Zieldienstes zu einer Informationsliste basierend auf der ersten MAC-Adresse und den zweiten Dienstinformationen, wobei die Gerätekennung des Zielgeräts und die Logikkanalinformationen des Zieldienstes aus der Informationsliste durch den Bluetooth-Chip verwendet werden, um zu bestimmen, ob die ersten Bluetooth-Daten die im Voraus eingestellte Bedingung erfüllen, und dementsprechend Verarbeiten der Bluetooth-Daten des Zieldienstes durch die Hilfsverarbeitungseinheit.

2. Verfahren nach Anspruch 1, wobei, dass der Bluetooth-Chip bestimmt, dass die ersten Bluetooth-Daten eine im Voraus eingestellte Bedingung erfüllen, ferner Folgendes umfasst:
Zergliedern, durch den Bluetooth-Chip, der ersten Bluetooth-Daten, um eine erste Gerätekennung und einen ersten Logikkanalindex zu erlangen; und
wenn die erste Gerätekennung und der erste Logikkanalindex in einer Informationsliste sind, Bestimmen, durch den Bluetooth-Chip, dass die ersten Bluetooth-Daten die im Voraus eingestellte Bedingung erfüllen, wobei die Informationsliste verwendet wird, um eine Gerätekennung eines Zielgeräts und Logikkanalinformationen eines Zieldienstes zu speichern, und die Hilfsverarbeitungseinheit konfiguriert ist, Bluetooth-Daten des Zieldienstes zu verarbeiten.

3. Verfahren nach Anspruch 2, wobei das Verfahren ferner Folgendes umfasst:
Senden, durch den Bluetooth-Chip, der ersten Bluetooth-Daten an die Hauptverarbeitungseinheit, wenn die erste Gerätekennung oder der erste Logikkanalindex nicht in der Informationsliste ist; und
Verarbeiten, durch die Hauptverarbeitungseinheit, der ersten Bluetooth-Daten.

4. Verfahren nach Anspruch 1, wobei das Verfahren ferner Folgendes umfasst:
Erzeugen, durch die Hilfsverarbeitungseinheit, von zweiten Bluetooth-Daten eines Zieldienstes;
Senden, durch die Hilfsverarbeitungseinheit, der zweiten Bluetooth-Daten an den Bluetooth-Chip;
Verkapseln, durch den Bluetooth-Chip, der zweiten Bluetooth-Daten, um Daten, die gesandt werden sollen, zu erlangen; und
Senden, durch den Bluetooth-Chip, der Daten, die gesandt werden sollen, an ein Zielgerät.

5. Verfahren nach einem der Ansprüche 1 bis 4, wobei die Gerätekennung des Zielgeräts eine Kennung einer asynchronen verbindungsorienterten Verknüpfung bzw. ACL umfasst.

6. Verfahren nach einem der Ansprüche 1 bis 4, wobei das Endgerät und das Zielgerät ein generisches Attributprofil bzw. GATT unterstützen und der Zieldienst mindestens ein Zeichen umfasst;
die ersten Dienstinformationen, die zweiten Dienstinformationen und die Logikkanalinformationen des Zieldienstes einen Logikkanalindex und eine Zeicheneigenschaft eines Zielzeichens in dem mindestens einen Zeichen umfassen; und
die ersten Dienstinformationen ferner eine universell eindeutige Kennung bzw. UUID des Zieldienstes umfassen und die ersten Dienstinformationen durch die Hilfsverarbeitungseinheit verwendet werden, um Bluetooth-Daten des Zielzeichens zu verarbeiten.

7. Verfahren nach Anspruch 6, wobei das Zielzeichen aktiviert werden muss; und
die ersten Dienstinformationen, die zweiten Dienstinformationen und die Logikkanalinformationen des Zieldienstes ferner einen Logikkanalindex eines Deskriptors des Zielzeichens umfassen.

8. Verfahren nach Anspruch 7, wobei das Zielzeichen durch die Hauptverarbeitungseinheit nicht aktiviert wird.

9. Verfahren nach Anspruch 7 oder 8, wobei das Verfahren vor dem Empfangen, durch den Bluetooth-Chip, von ersten Bluetooth-Daten fernes Folgendes umfasst:
Aktivieren, durch die Hauptverarbeitungseinheit und/oder die Hilfsverarbeitungseinheit, des Zielzeichens.

10. Verfahren nach einem der Ansprüche 1 bis 4, wobei das Endgerät und das Zielgerät ein Funkfrequenzkommunikation- bzw. RFCOMM-Protokoll unterstützen; und
die ersten Dienstinformationen und die zweiten Dienstinformationen eine Logikkanalzahl des Zieldienstes und eine Rolle des Zieldienstes umfassen, wobei die Rolle ein Client oder ein Server ist.

11. Verfahren nach Anspruch 10, wobei die ersten Dienstinformationen ferner eine UUID des Zieldienstes umfassen.

12. Verfahren nach Anspruch 10, wobei das Verfahren, vor dem Hinzufügen, durch den Bluetooth-Chip, der Gerätekennung des Zielgeräts und der Logikkanalinformationen des Zieldienstes zu der Informationsliste basierend auf der ersten MAC-Adresse und den zweiten Dienstinformationen, ferner Folgendes umfasst:
Senden, durch die Hauptverarbeitungseinheit, von Kanalinformationen an den Bluetooth-Chip, wobei die Kanalinformationen eine zweite MAC-Adresse des Zielgeräts und eine Datenverknüpfung-Verbindungskennung bzw. DLCI des Zieldienstes umfassen; und
das Hinzufügen, durch den Bluetooth-Chip, der Gerätekennung des Zielgeräts und der Logikkanalinformationen des Zieldienstes zu der Informationsliste basierend auf der ersten MAC-Adresse und den zweiten Dienstinformationen Folgendes umfasst:
Hinzufügen, durch den Bluetooth-Chip, der Gerätekennung des Zielgeräts und der Logikkanalinformationen des Zieldienstes zu der Informationsliste basierend auf der ersten MAC-Adresse, den zweiten Dienstinformationen, der zweiten MAC-Adresse und der DLCI.

13. Verfahren nach Anspruch 12, wobei das Hinzufügen, durch den Bluetooth-Chip, der Gerätekennung des Zielgeräts und der Logikkanalinformationen des Zieldienstes zu der Informationsliste basierend auf der ersten MAC-Adresse, den zweiten Dienstinformationen, der zweiten MAC-Adresse und der DLCI Folgendes umfasst:
Bestimmen, durch den Bluetooth-Chip, der Gerätekennung des Zielgeräts basierend auf der ersten MAC-Adresse oder der zweiten MAC-Adresse, wenn die erste MAC-Adresse die gleiche wie die zweite MAC-Adresse ist;
Erlangen, durch den Bluetooth-Chip, einer Logikkanalzahl, die verglichen werden soll, und einer Rolle, die verglichen werden soll, basierend auf der DLCI;
wenn die Logikkanalzahl, die verglichen werden soll, die gleiche wie die Logikkanalzahl des Zieldienstes ist und die Rolle, die verglichen werden soll, die gleiche wie die Rolle des Zieldienstes ist, Bestimmen, durch den Bluetooth-Chip, der DLCI als die Logikkanalinformationen des Zieldienstes; und
Hinzufügen der Gerätekennung des Zielgeräts und der DLCI zu der Informationsliste.

14. Endgerät, umfassend einen Prozessor und einen Bluetooth-Chip, wobei der Prozessor eine Hauptverarbeitungseinheit und eine Hilfsverarbeitungseinheit umfasst, der Prozessor an einen Speicher gekoppelt ist und der Prozessor ein in dem Speicher gespeichertes Computerprogramm ausführt, um das Verfahren nach einem der Ansprüche 1 bis 13 zu implementieren.

15. Computerlesbares Speichermedium, wobei das computerlesbare Speichermedium Computeranweisungen speichert, und wenn die Computeranweisungen auf einem Gerät ausgeführt werden, das Gerät in die Lage versetzt wird, das Verfahren nach einem der Ansprüche 1 bis 13 durchzuführen.

## Revendications

1. Procédé de traitement de données Bluetooth, appliqué à un dispositif terminal, dans lequel le dispositif terminal comprend une unité de traitement principale, une unité de traitement auxiliaire déchargeant le traitement à partir de l'unité de traitement principale et une puce Bluetooth, et le procédé comprend :
la réception (S1004), par la puce Bluetooth, de premières données Bluetooth ;
l'envoi (S1006), par la puce Bluetooth, des premières données Bluetooth à l'unité de traitement auxiliaire si la puce Bluetooth détermine que les premières données Bluetooth satisfont une condition prédéfinie ; et
le traitement (S1007), par l'unité de traitement auxiliaire, des premières données Bluetooth ;
dans lequel avant la réception, par la puce Bluetooth, des premières données Bluetooth, le procédé comprend en outre :
l'envoi (S1001), par l'unité de traitement principale, d'une première adresse de contrôle d'accès au support MAC d'un dispositif cible et de premières informations de service d'un service cible à l'unité de traitement auxiliaire, dans lequel le dispositif cible est un dispositif qui communique avec le dispositif terminal à travers Bluetooth, et les premières informations de service sont utilisées par l'unité de traitement auxiliaire pour traiter les données Bluetooth d'un service cible ;
l'envoi (S1002), par l'unité de traitement auxiliaire, de la première adresse MAC et de secondes informations de service à la puce Bluetooth, dans lequel les secondes informations de service représentent certaines ou la totalité des premières informations de service ; et
l'ajout (S1003), par la puce Bluetooth, d'un identifiant de dispositif du dispositif cible et d'informations de canal logique du service cible à une liste d'informations basée sur la première adresse MAC et les secondes informations de service, dans lequel l'identifiant de dispositif du dispositif cible et les informations de canal logique du service cible provenant de la liste d'informations sont utilisés par la puce Bluetooth pour déterminer si les premières données Bluetooth satisfont la condition prédéfinie et, en conséquence, traiter les données Bluetooth du service cible par l'unité de traitement auxiliaire.

2. Procédé selon la revendication 1, dans lequel le fait que la puce Bluetooth détermine que les premières données Bluetooth satisfont une condition prédéfinie comprend en outre :
l'analyse, par la puce Bluetooth, des premières données Bluetooth pour obtenir un premier identifiant de dispositif et un premier indice de canal logique ; et
si le premier identifiant de dispositif et le premier indice de canal logique se trouvent dans une liste d'informations, déterminer, par la puce Bluetooth, que les premières données Bluetooth satisfont la condition prédéfinie, dans lequel la liste d'informations est utilisée pour stocker un identifiant de dispositif d'un dispositif cible et des informations de canal logique d'un service cible, et l'unité de traitement auxiliaire est configurée pour traiter des données Bluetooth du service cible.

3. Procédé selon la revendication 2, dans lequel le procédé comprend en outre :
l'envoi, par la puce Bluetooth, des premières données Bluetooth à l'unité de traitement principale si le premier identifiant de dispositif ou le premier indice de canal logique n'est pas dans la liste d'informations ; et
le traitement, par l'unité de traitement principale, des premières données Bluetooth.

4. Procédé selon la revendication 1, dans lequel le procédé comprend en outre :
la génération, par l'unité de traitement auxiliaire, de secondes données Bluetooth d'un service cible ;
l'envoi, par l'unité de traitement auxiliaire, des secondes données Bluetooth à la puce Bluetooth ;
l'encapsulation, par la puce Bluetooth, des secondes données Bluetooth pour obtenir des données à envoyer ; et
l'envoi, par la puce Bluetooth, des données à envoyer à un dispositif cible.

5. Procédé selon l'une quelconque des revendications 1 à 4, dans lequel l'identifiant de dispositif du dispositif cible comprend un identifiant de liaison orienté connexion asynchrone ACL.

6. Procédé selon l'une quelconque des revendications 1 à 4, dans lequel le dispositif terminal et le dispositif cible prennent en charge un profil d'attributs génériques GATT, et le service cible comprend au moins un caractère ;
les premières informations de service, les secondes informations de service et les informations de canal logique du service cible comprennent un indice de canal logique et une propriété de caractère d'un caractère cible dans l'au moins un caractère ; et
les premières informations de service comprennent en outre un identifiant unique universellement UUID du service cible et les premières informations de service sont utilisées par l'unité de traitement auxiliaire pour traiter des données Bluetooth du caractère cible.

7. Procédé selon la revendication 6, dans lequel le caractère cible doit être activé ; et
les premières informations de service, les secondes informations de service et les informations de canal logique du service cible comprennent en outre un indice de canal logique d'un descripteur du caractère cible.

8. Procédé selon la revendication 7, dans lequel le caractère cible n'est pas activé par l'unité de traitement principale.

9. Procédé selon la revendication 7 ou 8, dans lequel avant la réception, par la puce Bluetooth, des premières données Bluetooth, le procédé comprend en outre :
l'activation, par l'unité de traitement principale et/ou l'unité de traitement auxiliaire, du caractère cible.

10. Procédé selon l'une quelconque des revendications 1 à 4, dans lequel le dispositif terminal et le dispositif cible prennent en charge un protocole de communication par radiofréquence RFCOMM ; et
les premières informations de service et les secondes informations de service comprennent un numéro de canal logique du service cible et un rôle du service cible, dans lequel le rôle est un client ou un serveur.

11. Procédé selon la revendication 10, dans lequel les premières informations de service comprennent en outre un UUID du service cible.

12. Procédé selon la revendication 10, dans lequel avant l'ajout, par la puce Bluetooth, de l'identifiant de dispositif du dispositif cible et des informations de canal logique du service cible à la liste d'informations basée sur la première adresse MAC et les secondes informations de service, le procédé comprend en outre :
l'envoi, par l'unité de traitement principale, des informations de canal à la puce Bluetooth, dans lequel les informations de canal comprennent une seconde adresse MAC du dispositif cible et un identifiant de connexion de liaison de données DLCI du service cible ; et
l'ajout, par la puce Bluetooth, de l'identifiant de dispositif du dispositif cible et des informations de canal logique du service cible à la liste d'informations basée sur la première adresse MAC et les secondes informations de service comprend :
l'ajout, par la puce Bluetooth, de l'identifiant de dispositif du dispositif cible et des informations de canal logique du service cible à la liste d'informations basée sur la première adresse MAC, les secondes informations de service, la seconde adresse MAC et le DLCI.

13. Procédé selon la revendication 12, dans lequel l'ajout, par la puce Bluetooth, de l'identifiant de dispositif du dispositif cible et des informations de canal logique du service cible à la liste d'informations basée sur la première adresse MAC, les secondes informations de service, la seconde adresse MAC et le DLCI comprend :
la détermination, par la puce Bluetooth, de l'identifiant de dispositif du dispositif cible sur la base de la première adresse MAC ou de la seconde adresse MAC si la première adresse MAC est la même que la seconde adresse MAC ;
l'obtention, par la puce Bluetooth, d'un numéro de canal logique à comparer et d'un rôle à comparer sur la base du DLCI ;
si le numéro de canal logique à comparer est le même que le numéro de canal logique du service cible, et le rôle à comparer est le même que le rôle du service cible, la détermination, par la puce Bluetooth, du DLCI en tant qu'information de canal logique du service cible ; et
l'ajout de l'identifiant de dispositif du dispositif cible et du DLCI à la liste d'informations.

14. Dispositif terminal, comprenant un processeur et une puce Bluetooth, dans lequel le processeur comprend une unité de traitement principale et une unité de traitement auxiliaire, le processeur est couplé à une mémoire, et le processeur exécute un programme d'ordinateur stocké dans la mémoire, pour mettre en œuvre le procédé selon l'une quelconque des revendications 1 à 13.

15. Support de stockage lisible par ordinateur, dans lequel le support de stockage lisible par ordinateur stocke des instructions d'ordinateur, et lorsque les instructions d'ordinateur sont exécutées sur un dispositif, le dispositif est activé pour exécuter le procédé selon l'une quelconque des revendications 1 à 13.
